# EUROPEAN PATENT SPECIFICATION

(11) **EP 4 044 196 B1**
(45) Date of publication and mention of the grant of the patent: **28.01.2026**
(21) Application number: 19944888.7
(22) Date of filing: 29.11.2019
(51) Int. Cl.: G21C 13/02, G21F 7/005, E06B 5/18

(54) **NUCLEAR POWER PLANT PERSONNEL GATE AND INSTALLATION METHOD THEREOF**
PERSONENSCHLEUSE EINES KERNKRAFTWERKS UND INSTALLATIONSVERFAHREN DAFÜR
PORTE DE PERSONNEL DE CENTRALE NUCLÉAIRE ET SON PROCÉDÉ D'INSTALLATION

(30) Priority: 12.09.2019 CN 201910864619
(43) Date of publication of application: 17.08.2022
(73) Proprietor: China Nuclear Power Engineering Co., Ltd., Shenzhen, Guangdong 518124 (CN); China Nuclear Power Design Company Ltd. (Shenzhen), Shenzhen, Guangdong 518100 (CN); China General Nuclear Power Corporation, Shenzhen, Guangdong 518026 (CN); CGN Power Co., Ltd., Shenzhen, Guangdong 518026 (CN)
(72) Inventor: XIE, Honghu, Shenzhen City, Guangdong 518100 (CN)
(74) Representative: Greaves Brewster LLP
(86) International application number: PCT/CN2019/121858
(87) International publication number: WO 2021/047066

(56) References cited:
- EP-A1- 1 623 920
- CN-A- 104 100 094
- CN-A- 104 153 308
- CN-A- 107 538 206
- CN-A- 107 887 039
- CN-A- 107 887 039
- CN-A- 109 736 673
- CN-A- 109 958 376
- CN-U- 203 499 511
- CN-U- 207 092 860
- CN-Y- 201 347 715
- CN-Y- 201 347 715
- JP-A- 2001 221 884
- JP-A- S61 120 090
- RU-U1- 180 081

## Description

### FIELD OF THE INVENTION

The present invention generally relates to nuclear power plants, and more particularly, relates to a nuclear power plant personnel gate and installation method thereof.

### BACKGROUND OF THE INVENTION

Generally, nuclear reactors are equipped with containment systems. In normal operating conditions, abnormal operating conditions and accident conditions, it is necessary to maintain the integrity and sealing of the containment pressure boundary, to prevent the leakage of radioactive materials. As an important part of the pressure boundary of the nuclear reactor containment, the nuclear power plant personnel gate also needs to undertake the same functional requirements. However, the conventional nuclear power plant personnel gates have the disadvantages of unsatisfactory sealing leakage rate, low transmission precision, and inconvenient installation process.

What is needed, therefore, is to provide a nuclear power plant personnel gate and installation method thereof, to solve the technical problem that the sealing leakage rate of the conventional nuclear power plant personnel gate does not meet the requirements of actual use.
JP2001221884A relates to a method for overhauling of swing support part of airlock door for staff.
CN201347715Y relates to a personnel strobe.
JPS61120090A relates to an airlock for staff.
CN107887039A relates to a nuclear power plant personnel airlock displacement compensation apparatus.

### SUMMARY OF THE INVENTION

The present invention relates to a nuclear power plant personnel gate and an installation method of a nuclear power plant personnel gate, as defined in the claims.

One object of the present invention is to provide a nuclear power plant personnel gate and installation method thereof, to solve the technical problem that the sealing leakage rate of the conventional nuclear power plant personnel gate does not meet the requirements of actual use.

According to one embodiment of the present invention, a nuclear power plant personnel gate, applicable to a double-layered containment of a nuclear power plant, the double-layered containment including an outer containment and an inner containment, the inner containment and the outer containment being correspondingly provided with an inner pre-buried penetrating piece and an outer pre-buried penetrating piece, and the personnel gate passing through the inner pre-buried penetrating piece and the outer pre-buried penetrating piece, wherein the inner pre-buried penetrating piece is fixedly connected to the personnel gate, and the outer pre-buried penetrating piece is flexibly connected to the personnel gate in a sealed mode. The nuclear power plant personnel gate includes: a shell ring assembly passing through and supporting the inner pre-buried penetrating piece and the outer pre-buried penetrating piece; an outer sealing door movably arranged at one side of the shell ring assembly close to the outer containment, for establishing a shielding sealing barrier on the boundary of the outer containment; an inner sealing door, movably arranged at one side of the shell ring assembly close to the inner containment, for establishing a pressure-bearing sealing barrier on the boundary of the inner containment; the shell ring assembly, the outer sealing door, and the inner sealing door jointly enclose a sealed space; and an intermediate transmission cartridge detachably disposed in the sealed space and movably connected to the inner sealing door and the outer sealing door, for controlling opening and closing of the inner sealing door and the outer sealing door.

According to one embodiment of the nuclear power plant personnel gate of the present invention, the shell ring assembly includes: an inner shell ring, an outer shell ring, and an intermediate shell ring fixedly connected to the inner shell ring and the outer shell ring, the inner shell ring is connected to the inner sealing door, and the outer shell ring is connected to the outer sealing door, the inner pre-buried penetrating piece is fixedly connected to the intermediate shell ring through a cantilever connection support ring plate, to support the personnel gate to the pre-buried penetrating piece and improve the synchronization of the displacement of the double-layer containment. The outer pre-buried penetrating piece is flexibly and sealingly connected to the ntermediate shell ring through a displacement compensation assembly, to compensate the displacement deviation of the intermediate shell ring and the outer shell ring in the civil installation and earthquake environment, and ensure the sealing between the outer containment and the inner containment ring corridor.

According to one embodiment of the nuclear power plant personnel gate of the present invention, the cantilever connection support ring plate includes: a support plate body having one end fixedly connected to the intermediate shell ring and other end extending upwardly, the support plate body having a height higher than a height of the inner pre-buried penetrating piece, and the support plate body being welded and connected to the inner pre-buried penetrating piece through a circumferential weld; and a backing plate arranged below the inner pre-buried penetrating piece and fixedly connected to the support plate body.

According to one embodiment of the nuclear power plant personnel gate of the present invention, the displacement compensation assembly includes a first clamp and a second clamp correspondingly disposed on the intermediate shell ring and the outer pre-buried penetrating piece, and a displacement compensation body connecting the intermediate shell ring and the outer pre-buried penetrating piece, one end of the displacement compensation body is fixed on the outer pre-buried penetrating piece via the first clamp, and the other end of the displacement compensation body is fixed on the intermediate shell ring via the second clamp.

According to one embodiment of the nuclear power plant personnel gate of the present invention, the displacement compensation body includes multiple layers of materials, an inner layer is a reinforcing cloth with high tensile strength to improve sealing performance, an outer layer is a protective ceramic cloth to improve fire performance, and the inner layer is assembled by thermal welding at the construction site and the outer layer is assembled by stitching.

According to one embodiment of the nuclear power plant personnel gate of the present invention, an inner surface of the inner layer of the displacement compensation body is coated with a high temperature resistant food-grade silica gel coating, to improve the high temperature resistance performance thereof.

According to one embodiment of the nuclear power plant personnel gate of the present invention, the intermediate transmission cartridge has an accommodating space, a multilayer transmission assembly is movably arranged in the accommodating space, and the multilayer transmission assembly is detachably connected to the intermediate transmission cartridge; each multilayer transmission assembly is driven by gears, and the multilayer transmission assembly drives the inner sealing door and the outer sealing door, and realizes the opening of the inner sealing door and the outer sealing door by means of mechanical interlocking.

According to one embodiment of the nuclear power plant personnel gate of the present invention, the multilayer transmission assembly includes: a power source module, a drive and pressure balance module and an interlocking mechanism module; the power source module is arranged at a bottom of the intermediate transmission cartridge to generate driving power manually or electrically; an input end of the drive and pressure balance module is connected to the power source module, and an output end of the drive and pressure balance module is respectively connected to a pressure balance mechanism, the inner sealing door, the outer sealing door and the interlocking mechanism module, for transmitting the driving force to the pressure balance mechanism, the inner sealing door and the outer sealing door to realize opening and closing of the sealing door and the operation of the pressure balance mechanism, and transmitting the driving force to the interlocking mechanism module; the interlocking mechanism module is arranged on a top of the intermediate transmission cartridge, and controls unilateral or bilateral opening of the inner sealing door and the outer sealing door according to the driving force; the accommodating space is provided with a first connecting assembly therein fixed on the bottom of the intermediate transmission cartridge and a second connecting assembly and a third connecting assembly fixed on a side wall of the intermediate transmission cartridge, the first connecting assembly, the second connecting assembly and the third connecting assembly are respectively detachably connected to the power source module, the drive and pressure balance module and the interlocking mechanism module.

According to one embodiment of the nuclear power plant personnel gate of the present invention, the power source module includes: a motor, a reducer connected to an output end of the motor, a first input shaft and a second input shaft connected to an output end of the reducer, and a first output shaft and a second output shaft corresponding to the first input shaft and the second input shaft, a first clutch mounted between the first input shaft and the first output shaft, a second clutch mounted between the the second input shaft and the second output shaft, the first input shaft and the second input shaft drive the corresponding first output shaft and second output shaft to output driving force or disengage from the first output shaft and second output shaft through the first clutch and the second clutch; a first driving gear and a second driving gear correspondingly sleeved on the first output shaft and the second output shaft, the drive force generated by the motor is transmitted to the drive and pressure balance module.

According to one embodiment of the nuclear power plant personnel gate of the present invention, the power source module further includes: a first manual shaft, a second manual shaft, a first manual shaft driven gear correspondingly connected to the first manual shaft, a first manual shaft driving gear meshing with the first manual shaft driven gear, the first manual shaft driving gear is sleeved on the third input shaft, the third input shaft is also sleeved with a first steering device and a third clutch, the second manual shaft is sleeved with a second steering gear and a fourth clutch, the third input shaft and the second manual shaft drive the corresponding first output shaft and the second output shaft to output driving force or disengage from the first output shaft and the second output shaft through the third clutch and the fourth clutch.

According to one embodiment of the nuclear power plant personnel gate of the present invention, the drive and pressure balance module includes: a fifth input shaft, a sixth input shaft, and a first driven gear, a first interlock driving gear and a first pressure driving gear sleeved on the fifth input shaft; a second driven gear, a second interlock driving gear, a second pressure driving gear sleeved on the sixth input shaft; the first driven gear and the second driven gear mesh with the first driving gear and the second driving gear; one end of the fifth input shaft and the sixth input shaft each is respectively connected to the inner sealing door and the outer sealing door, to drive the opening and closing of the inner sealing door and the outer sealing door; the first interlock driving gear and the second interlock driving gear are configured to transmit the driving force to the interlocking mechanism module.

According to one embodiment of the nuclear power plant personnel gate of the present invention, the drive and pressure balance module further includes: a first pressure balance shaft and a second pressure balance shaft, the first pressure driven gear is sleeved on the first pressure balance shaft, the first pressure driven gear is meshed with the first pressure driving gear for transmitting the driving force to the first pressure balance shaft, the second pressure driven gear is sleeved on the second pressure balance shaft, the second pressure driven gear is meshed with the second pressure driving gear for transmitting the driving force to the second pressure balance shaft, one end of the first pressure balance shaft and the second pressure balance shaft is connected to the pressure balance mechanism, to drive the pressure balance mechanism to open and close under the action of the driving force.

According to one embodiment of the nuclear power plant personnel gate of the present invention, the drive and pressure balance module further includes: a first safety clutch sleeved on the fifth input shaft and a second safety clutch sleeved on the sixth input shaft, the first safety clutch is arranged between the first interlock driving gear and the first driven gear, the second safety clutch is provided between the second interlock driving gear and the second driven gear, to realize overload protection.

According to one embodiment of the nuclear power plant personnel gate of the present invention, the interlocking mechanism module includes: a first interlock output shaft, a second interlock output shaft, and a first interlock driven gear and a second interlock driven gear correspondingly sleeved on one end of the first interlock output shaft and the second interlock output shaft, the first interlock driven gear and the second interlock driven gear are meshed with the second interlock driving gear and the first interlock driving gear respectively, for transmitting the driving force to the first interlock output shaft and the second interlock output shaft.

According to one embodiment of the nuclear power plant personnel gate of the present invention, the interlocking mechanism module further includes: an interlock unit, the interlock unit is connected to the first interlock output shaft and the second interlock output shaft, the interlock unit includes a first spline arranged on the first interlock output shaft, a second spline arranged on the second interlock output shaft, the interlock unit further includes a spanner, the spanner is connected to the first spline and the second spline respectively, so as to drive the disconnection or combination of the first spline and the second spline, to realize unilateral or bilateral opening of the inner sealing door and the outer sealing door.

According to one embodiment of the nuclear power plant personnel gate of the present invention, the inner sealing door includes a sealing door body and a door frame, the sealing door body is connected to the intermediate transmission cartridge, the door frame is fixedly connected to the shell ring assembly, and the sealing door body is locked to the door frame via a seal locking device, the seal locking device includes: a first commutator, connected to the intermediate transmission cartridge, to change the direction of the driving force output by the intermediate transmission cartridge; a transmission assembly, connected to the first commutator for transmitting the driving force transmitted by the first commutator; a locking assembly, connected to the transmission assembly, for locking the sealing door body to the door frameunder the action of the driving force.

According to one embodiment of the nuclear power plant personnel gate of the present invention, the transmission assembly includes: a first output shaft connected to the first commutator and a first sprocket wheel sleeved on the first output shaft, the first sprocket wheel and the second sprocket sleeved on the hinge mechanism are connected via a first chain, the second sprocket wheel drives the hinge mechanism to rotate, and a third sprocket wheel sleeved on the hinge mechanism rotates under the rotation of the hinge mechanism, the third sprocket wheel is connected to the fourth sprocket wheel through a second chain, the fourth sprocket wheel is connected to the second commutator through a third output shaft, the second commutator is sleeved on one end of the horizontal drive link, the third commutator is sleeved on the other end of the horizontal drive link, the output ends of the third commutator are respectively connected to the first vertical driving link and the second vertical driving link, the first vertical driving link is connected to a fourth commutator, the second vertical driving link is connected to a fifth commutator, the fourth commutator and the fifth commutator are both connected to the locking assembly, to transmit the driving force to the locking assembly.

According to one embodiment of the nuclear power plant personnel gate of the present invention, the locking assembly includes: a first telescopic rod, a second telescopic rod, a first locking lever, a second locking lever, a first bolt and a second bolt fixed on the sealing door body, a third bolt and a fourth door bolt fixed on the door frame, a first ball joint connecting the first telescopic rod and the first locking lever, a second ball joint connecting the second telescopic rod and the second locking lever, one end of the first telescopic rod is connected to one of the output ends of the fourth commutator, and the other end of the first telescopic rod is connected to the first ball joint, the other end of the first ball joint is connected to one end of the first locking lever, the other end of the first locking lever slidly extends through the first bolt and the third bolt, one end of the second telescopic rod is connected to the other output end of the fourth commutator, the other end of the second telescopic rod is connected to the second ball joint, the other end of the second ball joint is connected with one end of the second locking lever, the other end of the second locking lever slidly extends through the second bolt and the fourth bolt, the first telescopic rod and the second telescopic rod can be driven by the driving force to lengthen or shorten, so that the first locking lever extends into or out of the third bolt; the second locking lever extends into or out of the fourth bolt.

According to one embodiment of the nuclear power plant personnel gate of the present invention, the locking assembly further comprises: a third telescopic rod, a fourth telescopic rod, a third locking lever, a fourth locking lever, a fifth bolt and a sixth bolt fixed on the sealing door body, a seventh bolt and an eighth bolt fixed on the door frame, a third ball joint connecting the third telescopic rod and the third locking lever, a fourth ball joint connecting the fourth telescopic rod and the fourth locking lever, one end of the third telescopic rod is connected to one of the output ends of the fifth commutator, the other end of the third telescopic rodis connected with the third ball joint, the other end of the third ball joint is connected with one end of the third locking lever, other end of the third locking lever slidely extends through the fifth bolt and the seventh bolt, one end of the fourth telescopic rod is connected to the other output end of the fifth commutator, the other end of the fourth telescopic rod is connected with the fourth ball joint, the other end of the fourth ball joint is connected with one end of the fourth locking lever, the other end of the fourth locking lever slidely extends through the sixth bolt and the eighth bolt, and the third telescopic rod and the fourth telescopic rod are driven by the driving force to lengthen or shorten, so that the third locking lever can extend into or out of the seventh bolt, and the fourth locking lever can extend into or out of the eighth bolt.

According to one embodiment of the nuclear power plant personnel gate of the present invention, a passage floor is provided in the sealed space for the staff to pass through, and the passage floor has a length no less than that of the sealed spaces.

According to another embodiment of the present invention, an installation method of a nuclear power plant personnel gate, applicable to the nuclear power plant personnel gate according to the present invention is provided. The installation method includes the steps of: fixing a support bracket to a predetermined overall horizontal introduction installation position of the personnel gate via expansion bolts, the support bracket being supported on the outer containment via wooden blocks; installing a first sliding bracket, a second sliding bracket and a transfer trolley on the support bracket after the support bracket being connected and fixed, adjusting elevation of the transfer trolley by adjusting an adjusting gasket set, and fixing the transfer trolley via connecting bolts after the elevation of the transfer trolley is adjusted; hoisting the personnel gate vertically as a whole by an off-site crane, and fixing the personnel gate to the first sliding bracket and the second sliding bracket by wire ropes; installing pulling chains, pulling the personnel gate horizontally to a predetermined installation position, and removing the transfer trolley and the support bracket; and installing supports of the personnel gate, and removing the first sliding bracket and the first sliding bracket.

Compared with the prior art, the nuclear power plant personnel gate of the present invention has the following advantages. The present invention provides a nuclear power plant personnel gate and an installation method thereof, aiming at the technical problem in the prior art that the leakage rate of the nuclear power plant personnel gate does not meet the actual requirements, can obtain the sealing and continuity of the enter and exit passages of the double-layered containment. Due to the arrangement of the cantilever connection support ring plate, the impact of the double-layer containment displacement asynchrony on the on-site installation of the personnel gate can be solved. Due to the arrangement of the displacement compensation assembly, the inner and outer pre-buried penetrating pieces are conneted, to compensate for the displacement deviation of the two penetrating pieces in civil installation, earthquake and other environments, ensure the sealing between the penetrating pieces and the double-layer containment ring corridor, the flexible seals can be welded and clamped on site. The seal and the penetrating piece can be installed separately, and subsequent replacement is more convenient. The intermediate transmission cartridge of the present invention also adopts gear transmission instead of chain transmission, which improves transmission efficiency and greatly improves transmission accuracy. The impact rebound problem during the opening or closing process of the sealing door brought by the chain drive is eliminated. The locking of the sealing door is realized by the locking device, which solves the problem of the accuracy and synchronization of the locking operation of the personnel gate sealing door. Finally, the installation method is proposed, in which the personnel gate equipment is required to complete the equipment assembly and the factory joint adjustment test before leaving the factory, which effectively improves the assembly accuracy of the equipment, avoids the problems of low assembly accuracy, easy rework and unqualified on-site acceptance tests that exist in the on-site segmented installation. The on-site installation operation period of the personnel gate introduced into the installation scheme is short, and the operating space required is small, which facilitates the on-site construction of other items.

### BRIEF DESCRIPTION OF THE DRAWINGS

In order to make the objects, technical solutions and advantages of the present invention clearer, the embodiments of the present invention will be further described in detail with reference to the accompanying drawings, in which:
Fig.1 is a schematic structural diagram of a nuclear power plant personnel gate according to a first embodiment of the present invention;
Fig. 2 is a schematic structural diagram of a cantilever connection support ring plate in the nuclear power plant personnel gate of the first embodiment of the present invention;
Fig. 3 is a schematic structural diagram of a displacement compensation assembly in the nuclear power plant personnel gate of the first embodiment of the present invention;
Fig. 4 is a schematic structural diagram of an intermediate transmission cartridge in the nuclear power plant personnel gate of the first embodiment of the present invention;
Fig. 5 is a schematic diagram of internal structure of the intermediate transmission cartridge in the nuclear power plant personnel gate of the first embodiment of the present invention;
Fig. 6 is a schematic structural diagram of a seal locking device in the nuclear power plant personnel gate of the first embodiment of the present invention;
Fig. 7 is a flowchart of an installation method of a nuclear power plant personnel gate according to a second embodiment of the present invention;
Fig. 8 is a schematic structural diagram of an installation tool in the installation method of a nuclear power plant personnel gate according to a second embodiment of the present invention;
Fig. 9 is a schematic structural diagram of a first sliding bracket in the installation method of a nuclear power plant personnel gate according to a second embodiment of the present invention;
Fig. 10 is a schematic structural diagram of a second sliding bracket in the installation method of a nuclear power plant personnel gate according to a second embodiment of the present invention;
Fig. **11** is a schematic structural diagram of a transfer trolley in the installation method of a nuclear power plant personnel gate according to a second embodiment of the present invention;
Fig. 12 is a schematic structural diagram of a support bracket in the installation method of a nuclear power plant personnel gate according to a second embodiment of the present invention;
Fig. 13 is a schematic diagram in the installation method of a nuclear power plant personnel gate according to a second embodiment of the present invention, showing the installation tool being overall horizontally introduced to an installation position;
Fig. 14 is a schematic diagram in the installation method of a nuclear power plant personnel gate according to a second embodiment of the present invention, showing the state of the personnel gate prior to being overall horizontally introduced; and
Fig. 15 is a schematic diagram in the installation method of a nuclear power plant personnel gate according to a second embodiment of the present invention, showing the state of the personnel gate after being overall horizontally introduced.

### DETAILED DESCRIPTION OF THE INVENTION

In order to solve the problems of sealing and continuity of the equipment enter and exit passages existing in the prior art, the present invention aims to provide a nuclear power plant personnel gate and an installation method thereof. The core idea of the present invention is to provide a nuclear power plant personnel gate and an installation method thereof, which can obtain the sealing and continuity of the enter and exit passages of the double-layered containment. Due to the arrangement of the cantilever connection support ring plate, the impact of the double-layer containment displacement asynchrony on the on-site installation of the personnel gate can be solved. Due to the arrangement of the displacement compensation assembly, the inner and outer pre-buried penetrating pieces are conneted, to compensate for the displacement deviation of the two penetrating pieces in civil installation, earthquake and other environments, ensure the sealing between the penetrating pieces and the double-layer containment ring corridor, the flexible seals can be welded and clamped on site. The seal and the penetrating piece can be installed separately, and subsequent replacement is more convenient. The intermediate transmission cartridge of the present invention also adopts gear transmission instead of chain transmission, which improves transmission efficiency and greatly improves transmission accuracy. The impact rebound problem during the opening or closing process of the sealing door brought by the chain drive is eliminated. The locking of the sealing door is realized by the locking device, which solves the problem of the accuracy and synchronization of the locking operation of the personnel gate sealing door. Finally, the installation method is proposed, in which the personnel gate equipment is required to complete the equipment assembly and the factory joint adjustment test before leaving the factory, which effectively improves the assembly accuracy of the equipment, avoids the problems of low assembly accuracy, easy rework and unqualified on-site acceptance tests that exist in the on-site segmented installation. The on-site installation operation period of the personnel gate introduced into the installation scheme is short, and the operating space required is small, which facilitates the on-site construction of other items.

In order to make the objects, technical solutions and technical effects of the present invention clearer, the specific embodiments of the present invention will be further described in detail below with reference to the accompanying drawings.

### The First Embodiment

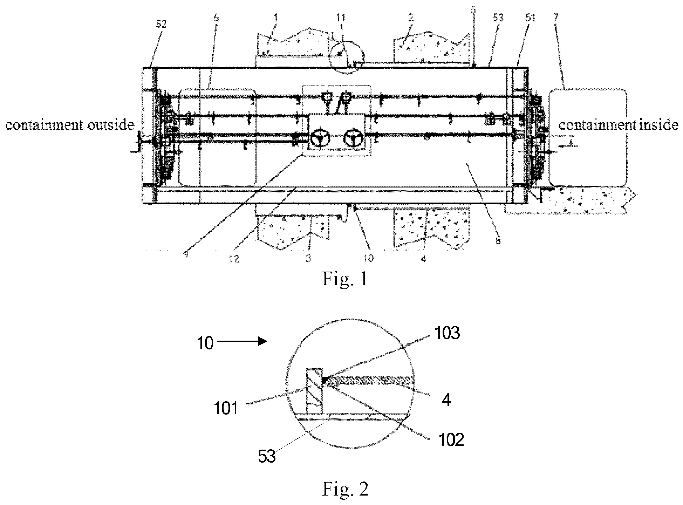

The present invention provides a nuclear power plant personnel gate, which is applicable to a double-layered containment of a nuclear power plant. Referring to Fig. 1, the double-layered containment includes an outer containment 1 and an inner containment 2, and an inner pre-buried penetrating piece 4 and an outer pre-buried penetrating piece 3 are arranged on the outer containment 1 and the inner containment 2 correspondingly. The personnel gate penetrates through the inner pre-buried penetrating piece 4 and the outer pre-buried penetrating piece 3, the inner pre-buried penetrating piece 4 is fixedly connected to the personnel gate, and the outer pre-buried penetrating piece 3 is flexibly connected to the personnel gate in a sealed mode.

The nuclear power plant personnel gate includes: a shell ring assembly 5, passing through the inner pre-buried penetrating piece 4 and the outer pre-buried penetrating piece 3, to support the the inner pre-buried penetrating piece 4 and the outer pre-buried penetrating piece 3; an outer sealing door 6 movably arranged at one side of the shell ring assembly 5 close to the outer containment 1, for establishing a shielding sealing barrier on the boundary of the outer containment 1; an inner sealing door 7, movably arranged at one side of the shell ring assembly 5 close to the inner containment 2, for establishing a pressure-bearing sealing barrier on the boundary of the inner containment 2; the shell ring assembly 5, the outer sealing door 6, and the inner sealing door 7 jointly enclose a sealed space 8; and an intermediate transmission cartridge 9 detachably disposed in the sealed space 8 and movably connected to the inner sealing door 7 and the outer sealing door 6, for controlling opening and closing of the the inner sealing door 7 and the outer sealing door 6.

According to a preferred embodiment of the present invention, a passage floor 12 is provided in the sealed space 8 for the staff to pass through, and the passage floor 12 has a length no less than that of the sealed spaces 8.

Further, the shell ring assembly 5 includes an inner shell ring 51, an outer shell ring 52, and an intermediate shell ring 53 fixedly connected to the inner shell ring 51 and the outer shell ring 52. The inner shell ring 51 is connected to the inner sealing door 7, and the outer shell ring 52 is connected to the outer sealing door 6, the inner pre-buried penetrating piece 4 is fixedly connected to the intermediate shell ring 53 through a cantilever connection support ring plate 10 to support the personnel gate to the inner pre-buried penetrating piece 4, to improve the displacement synchronization of double-layer containment. The outer pre-buried penetrating piece 3 is flexibly and sealingly connected to the ntermediate shell ring 53 through a displacement compensation assembly 11, to compensate the displacement deviation of the intermediate shell ring 53 and the outer pre-buried penetrating piece 3 in the civil installation and earthquake environment, and ensure the sealing between the outer containment 1 and the ring corridor of the inner containment 2.

Further, referring to Fig 2 , the cantilevered connection support ring plate 10 includes: a support plate body 101 having one end fixedly connected to the intermediate shell ring 53 and other end extending upwardly, the support plate body 101 having a height higher than a height of the inner pre-buried penetrating piece 4, and the support plate body 101 being welded and connected to the inner pre-buried penetrating piece 4 through a circumferential weld 103; and a backing plate 102 arranged below the inner pre-buried penetrating piece 4 and fixedly connected to the support plate body 101. Due to the arrangement of the backing plate 102, the welding quality of the girth weld can be ensured, the fixation reliability of the inner pre-buried penetrating piece 4 and the intermediate shell ring 53 can be ensured. In this manner, the entire personnel gate equipment can be supported on the inner pre-buried penetrating piece 4.

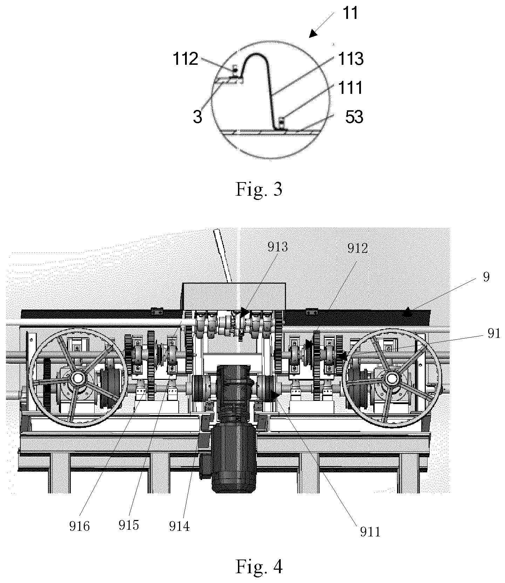

Further, referring to Fig. 3, the displacement compensation assembly 11 includes a first clamp 111 and a second clamp 112 correspondingly disposed on the intermediate shell ring 53 and the outer pre-buried penetrating piece 3, and a displacement compensation body 113 connecting the intermediate shell ring 53 and the outer pre-buried penetrating piece 3. One end of the displacement compensation body 113 is fixed on the outer pre-buried penetrating piece 3 via the first clamp 111, and the other end of the displacement compensation body 113 is fixed on the intermediate shell ring 53 via the second clamp 112. Due to the arrangement of the displacement compensation assembly 11, the sealing performance of the corridor space between the outer containment 1 and the inner containment 2 can be ensured, and the leakage of radioactive substances can be prevented.

Further, the displacement compensation body 113 includes multiple layers of materials, an inner layer is a reinforcing cloth with high tensile strength to improve sealing performance, an outer layer is a protective ceramic cloth to improve fire performance, the inner layer is assembled by thermal welding at the construction site and the outer layer is assembled by stitching. An inner surface of the inner layer of the displacement compensation body 113 is coated with a high temperature resistant food-grade silica gel coating, to improve the high temperature resistance. It should be noted that, in installation of the displacement compensation assembly 11, the displacement compensation assembly 11 is actually installed around the site.

Further, referring to Fig. 4, the intermediate transmission cartridge 9 has an accommodating space, and a multilayer transmission assembly 91 is movably arranged in the accommodation space. The multilayer transmission assembly 91 is detachably connected to the intermediate transmission cartridge;
each multilayer transmission assembly 91 is driven by gears, and the multilayer transmission assembly 91 drives the inner sealing door 7 and the outer sealing door 6, and realizes the opening of the inner sealing door 7 and the outer sealing door 6 by means of mechanical interlocking. Adopting gear transmission, instead of chain transmission, will further improve the transmission efficiency and transmission accuracy, and effectively eliminate the problem of the rebound impact of the sealing door caused by the chain transmission.
Specifically, the multilayer transmission assembly 91 includes: a power source module 911, a drive and pressure balance module 912, and an interlocking mechanism module 913;
The power source module 911 is arranged at the bottom of the intermediate transmission cartridge 9, to generate driving force manually or electrically;
an input end of the drive and pressure balance module 912 is connected to the power source module 911, and the output end of the drive and pressure balance module 912 is respectively connected to the pressure balance mechanism, the inner sealing door 7, the outer sealing door 6 and the interlocking mechanism module 913, for transmitting the driving force to the pressure balance mechanism, the inner sealing door 7 and the outer sealing door 6, to realize the opening and closing of the inner sealing door 7 and the outer sealing door 6 and the operation of the pressure balance mechanism; and to transmit the driving force to the interlocking mechanism module 913;
the interlocking mechanism module 913 is arranged on the top of the intermediate transmission cartridge 9, to control the unilateral or bilateral opening of the inner sealing door 7 and the outer sealing door 6 according to the driving force.

Further, the accommodating space is provided with a first connecting assembly 914 fixed on the bottom of the intermediate transmission cartridge 9, and a second connecting assembly 915 and a third connecting assembly 916 fixed on the side wall of the intermediate transmission cartridge 9. The first connecting assembly 914, the second connecting assembly 915 and the third connecting assembly 916 are respectively detachably connected to the power source module 911, the drive and pressure balance module 912 and the interlocking mechanism module 913. Due to the arrangement of the first connecting assembly 914, the second connecting assembly 915 and the third connecting assembly 916, the installation of the intermediate transmission cartridge 9 can be decoupled from the multilayer transmission assembly 91, so that the multilayer transmission assembly 9 can be installed when the operation is required after the installation of the personnel gate. The multilayer transmission assembly 9 is exempted from the maintenance requirements during the on-site installation, commissioning and maintenance of the power station. In the subsequent operation, if maintenance is required, it can be disassembled and replaced at any time. Preferably, the multilayer transmission assembly 91 and the first connecting assembly 914, the second connecting assembly 915 and the third connecting assembly 916 can be detachable by connecting detachable parts such as bearings, bearing seats and bolts. The specific setting position of each component can be set according to actual needs, as long as the driving force can be stably transmitted when the transmission assembly is working and the transmission assembly is detachable.

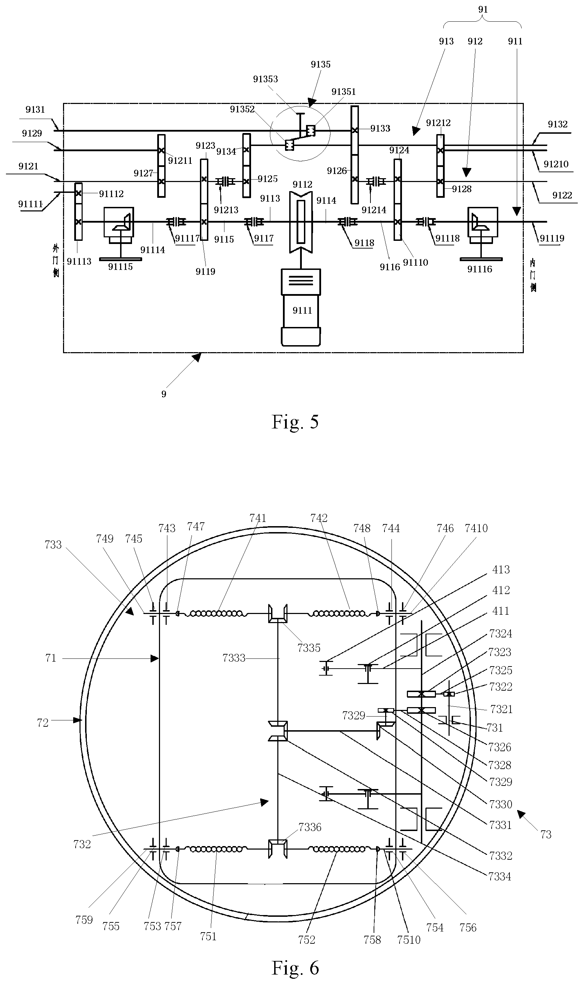

Specifically, referring to Fig. 5, the power source module 911 includes: a motor 9111, a reducer 9112 connected to the output end of the motor 9111, a first input shaft 9113 and a second input shaft 9114 connected to the output end of the reducer 9112, and a first output shaft 9115 and a second output shaft 9116 corresponding to the first input shaft 9113 and the second input shaft 9114, a first clutch 9117 installed between the first input shaft 9113 and the first output shaft 9115, a second clutch 9118 mounted between the second input shaft 9114 and the second output shaft 9116, the first input shaft 9113 and the second input shaft 9114 drive the corresponding first output shaft 9115 and second output shaft 9116 to output driving force or disengage from the first output shaft 9115 and second output shaft 9116 through the first clutch 9117 and the second clutch 9118. The power source module 911 further includes: a first driving gear 9119 and a second driving gear 91110 correspondingly sleeved on the first output shaft 9115 and the second output shaft 916, to transmit the driving force generated by the motor 9111 to the drive and pressure balance module 912.

Further, the power source module 911 further includes: a first manual shaft 91111, a second manual shaft 91119, a first manual shaft driven gear 91112 correspondingly connected to the first manual shaft 91111, a first manual shaft driving gear 91113 meshing with the first manual shaft driven gear 91112, the first manual shaft driving gear 91113 is sleeved on the third input shaft 91114, the third input shaft 91114 is also sleeved with a first steering device 91115 and a third clutch 91117, the second manual shaft 91119 is sleeved with a second steering gear 91116 and a fourth clutch 91118, the third input shaft 91114 and the second manual shaft 91119 drive the corresponding first output shaft 9115 and the second output shaft 9116 to output driving force or disengage from the first output shaft 9115 and the second output shaft 9116 through the third clutch 91117 and the fourth clutch 91118.

Further, the drive and pressure balance module 912 includes: a fifth input shaft 9121, a sixth input shaft 9122, and a first driven gear 9123, a first interlock driving gear 9125 and a first pressure driving gear 9127 sleeved on the fifth input shaft 9121; a second driven gear 9124, a second interlock driving gear 9126, a second pressure driving gear 9128 sleeved on the sixth input shaft 9122; the first driven gear 9123 and the second driven gear 9124 mesh with the first driving gear 9119 and the second driving gear 91110. One end of the fifth input shaft 9121 and the sixth input shaft 9122 each is respectively connected to the inner sealing door 7 and the outer sealing door 6, to drive the opening and closing of the inner sealing door 7 and the outer sealing door 6. The first interlock driving gear 9125 and the second interlock driving gear 9126 are configured to transmit the driving force to the interlocking mechanism module 913.

Further, the drive and pressure balance module 912 further includes: a first pressure balance shaft 9129 and a second pressure balance shaft 91210. The first pressure driven gear 91211 is sleeved on the first pressure balance shaft 9129, the first pressure driven gear 91211 is meshed with the first pressure driving gear 9127 for transmitting the driving force to the first pressure balance shaft 9129. The second pressure driven gear 91212 is sleeved on the second pressure balance shaft 91210, the second pressure driven gear 91212 is meshed with the second pressure driving gear 9128 for transmitting the driving force to the second pressure balance shaft 91210. One end of the first pressure balance shaft 9129 and the second pressure balance shaft 91210 is connected to the pressure balance mechanism, to drive the pressure balance mechanism to open and close under the action of the driving force.

Further, the drive and pressure balance module 912 further includes: a first safety clutch 91213 sleeved on the fifth input shaft 9121 and a second safety clutch 91214 sleeved on the sixth input shaft 9122. The first safety clutch 91213 is arranged between the first interlock driving gear 9125 and the first driven gear 9123. The second safety clutch 91214 is provided between the second interlock driving gear 9126 and the second driven gear 9124, to realize overload protection.

Further, the interlocking mechanism module 913 includes: a first interlock output shaft 9131, a second interlock output shaft 9132, and a first interlock driven gear 9133 and a second interlock driven gear 9134 correspondingly sleeved on one end of the first interlock output shaft 9131 and the second interlock output shaft 9132. The first interlock driven gear 9133 and the second interlock driven gear 9134 are meshed with the second interlock driving gear 9126 and the first interlock driving gear 9125 respectively, for transmitting the driving force to the first interlock output shaft 9131 and the second interlock output shaft 9132.

Further, the interlocking mechanism module 913 further includes: an interlock unit 9135, the interlock unit 9135 is connected to the first interlock output shaft 9131 and the second interlock output shaft 9132. The interlock unit 9135 includes a first spline 91351 arranged on the first interlock output shaft 9131, a second spline 91352 arranged on the second interlock output shaft 9132. The interlock unit 9135 further includes a spanner 91353, the spanner 91353 is connected to the first spline 91351 and the second spline 91352 respectively, so as to drive the disconnection or combination of the first spline 91351 and the second spline 91352, to realize unilateral or bilateral opening of the inner sealing door 7 and the outer sealing door 6.

Further, referring to Fig. 6, the inner sealing door 7 includes a sealing door body 71 and a door frame 72. The sealing door body 71 is connected to the intermediate transmission cartridge 9, the door frame 72 is fixedly connected to the shell ring assembly 5, and the sealing door body 71 is locked to the door frame 72 via a seal locking device 73. The seal locking device 73 includes a first commutator 731, connected to the intermediate transmission cartridge 9, to change the direction of the driving force output by the intermediate transmission cartridge 9; a transmission assembly 732, connected to the first commutator 731 for transmitting the driving force transmitted by the first commutator 731; a locking assembly 733, connected to the transmission assembly 732, for locking the sealing door body 71 to the door frame 72 under the action of the driving force.

Further, the transmission assembly 732 includes: a first output shaft 7321 connected to the first commutator 731 and a first sprocket wheel 7322 sleeved on the first output shaft 7321. The first sprocket wheel 7322 and the second sprocket 7323 sleeved on the hinge mechanism 7324 are connected via a first chain 7325, the second sprocket wheel 7323 drives the hinge mechanism 7324 to rotate, and a third sprocket wheel 7326 sleeved on the hinge mechanism 7324 rotates under the rotation of the hinge mechanism 7324. The third sprocket wheel 7326 is connected to the fourth sprocket wheel 7327 through a second chain 7328, the fourth sprocket wheel 7327 is connected to the second commutator 7330 through a third output shaft 7329. The second commutator 7330 is sleeved on one end of the horizontal drive link 7331, the third commutator 7332 is sleeved on the other end of the horizontal drive link 7331, and the output ends of the third commutator 7332 are respectively connected to the first vertical driving link 7333 and the second vertical driving link 7334. The first vertical driving link 7333 is connected to a fourth commutator 7335, the second vertical driving link 7334 is connected to a fifth commutator 7336, to transmit the driving force to the fourth commutator 7335 and the fifth commutator 7336 after the driving force changes. The fourth commutator 7335 and the fifth commutator 7336 are both connected to the locking assembly 733, so as to transmit the driving force to the locking assembly 733.

Further, the locking assembly 733 includes: a first telescopic rod 741, a second telescopic rod 742, a first locking lever 749, a second locking lever 7410, a first bolt 743 and a second bolt 744 fixed on the sealing door body 71, a third bolt 744 and a fourth door bolt 746 fixed on the door frame 72, a first ball joint 747 connecting the first telescopic rod 741 and the first locking lever 749, and a second ball joint 748 connecting the second telescopic rod 742 and the second locking lever 7410. One end of the first telescopic rod 741 is connected to one of the output ends of the fourth commutator 7335, and the other end of the first telescopic rod 741 is connected to the first ball joint 747, the other end of the first ball joint 747 is connected to one end of the first locking lever 749, the other end of the first locking lever 749 slidly extends through the first bolt 743 and the third bolt 745, one end of the second telescopic rod 742 is connected to the other output end of the fourth commutator 7335, the other end of the second telescopic rod 742 is connected to the second ball joint 748, the other end of the second ball joint 748 is connected with one end of the second locking lever 7410, the other end of the second locking lever 7410 slidly extends through the second bolt 744 and the fourth bolt 746. The first telescopic rod 741 and the second telescopic rod 742 can be driven by the driving force to lengthen or shorten, so that the first locking lever 749 extends into or out of the third bolt 745; the second locking lever 7410 extends into or out of the fourth bolt 746.

Further, the locking assembly 733 further includes: a third telescopic rod 751, a fourth telescopic rod 752, a third locking lever 759, a fourth locking lever 7510, a fifth bolt 753 and a sixth bolt 754 fixed on the sealing door body 71, a seventh bolt 755 and an eighth bolt 756 fixed on the door frame 20, a third ball joint 757 connecting the third telescopic rod 751 and the third locking lever 759, a fourth ball joint 758 connecting the fourth telescopic rod 759 and the fourth locking lever 7510. One end of the third telescopic rod 751 is connected to one of the output ends of the fifth commutator 7336, the other end of the third telescopic rod 751 is connected with the third ball joint 757, the other end of the third ball joint 757 is connected with one end of the third locking lever 759, other end of the third locking lever 759 slidely extends through the fifth bolt 753 and the seventh bolt 755. One end of the fourth telescopic rod 752 is connected to the other output end of the fifth commutator 7336, the other end of the fourth telescopic rod 752 is connected with the fourth ball joint 758, the other end of the fourth ball joint 758 is connected with one end of the fourth locking lever 7510, the other end of the fourth locking lever 7510 slidely extends through the sixth bolt 754 and the eighth bolt 756. The third telescopic rod 751 and the fourth telescopic rod 752 are driven by the driving force to lengthen or shorten, so that the third locking lever 329 can extend into or out of the seventh bolt 325, and the fourth locking lever 7510 can extend into or out of the eighth bolt 756.

The telescopic rod and the locking lever are connected by a ball joint, and the deflection angle of the ball joint can be adjusted in real time, which can solve the problem that the locking lever is stuck due to eccentric load during the bolt insertion process.

It should be understood that, the outer sealing door 6 and the inner sealing door 7 have the same locking device, which will not be explained again.

### The Second Embodiment

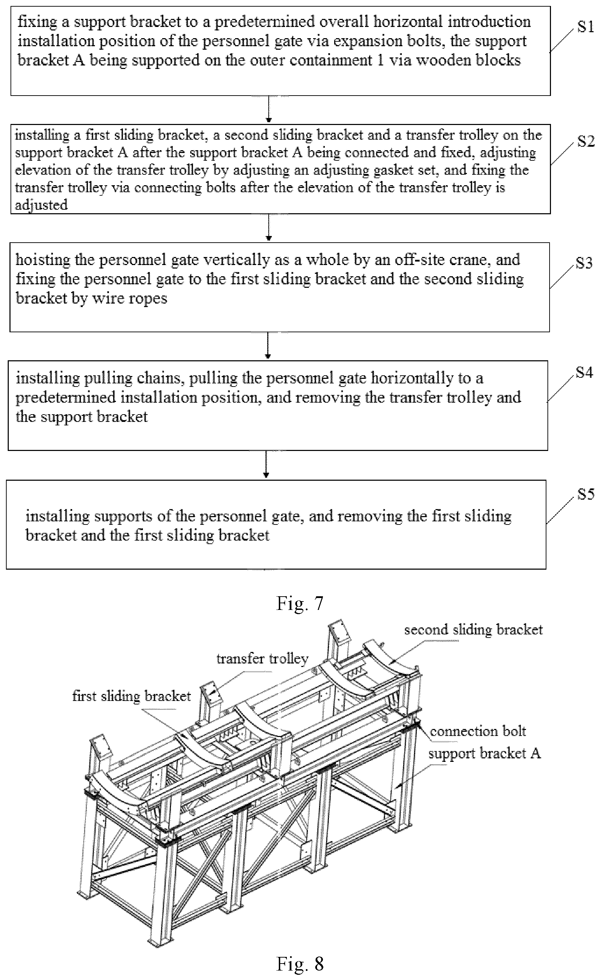

The present invention also provides an installation method of a nuclear power plant personnel gate, as shown in Fig. 7: the installation method includes the steps of:
Step S1, fixing a support bracket to a predetermined overall horizontal introduction installation position of the personnel gate via expansion bolts, the support bracket A being supported on the outer containment 1 via wooden blocks;
Step S2, installing a first sliding bracket, a second sliding bracket and a transfer trolley on the support bracket A after the support bracket A being connected and fixed, adjusting elevation of the transfer trolley by adjusting an adjusting gasket set, and fixing the transfer trolley via connecting bolts after the elevation of the transfer trolley is adjusted;
Step S3, hoisting the personnel gate vertically as a whole by an off-site crane, and fixing the personnel gate to the first sliding bracket and the second sliding bracket by wire ropes;
Step S4, installing pulling chains, pulling the personnel gate horizontally to a predetermined installation position, and removing the transfer trolley and the support bracket; and
Step S5, installing supports of the personnel gate, and removing the first sliding bracket and the first sliding bracket.

In the installation method of a nuclear power plant personnel gate of the present invention, the personnel gate equipment is required to complete the equipment assembly and the factory joint adjustment test before leaving the factory, which effectively improves the assembly accuracy of the equipment, avoids the problems of low assembly accuracy, easy rework and unqualified on-site acceptance tests that exist in the on-site segmented installation. The on-site installation operation period of the personnel gate introduced into the installation scheme is short, and the operating space required is small, which facilitates the on-site construction of other items.

Referring to Fig. 8, installation tools used to introduce the overall horizontal installation position include: a first sliding bracket, a second sliding bracket, a transfer trolley and a support bracket A. The first sliding bracket and the second sliding bracket are fixed on two ends of the transfer trolley, and the transfer trolley and the support bracket A are fixedly connected by bolts.

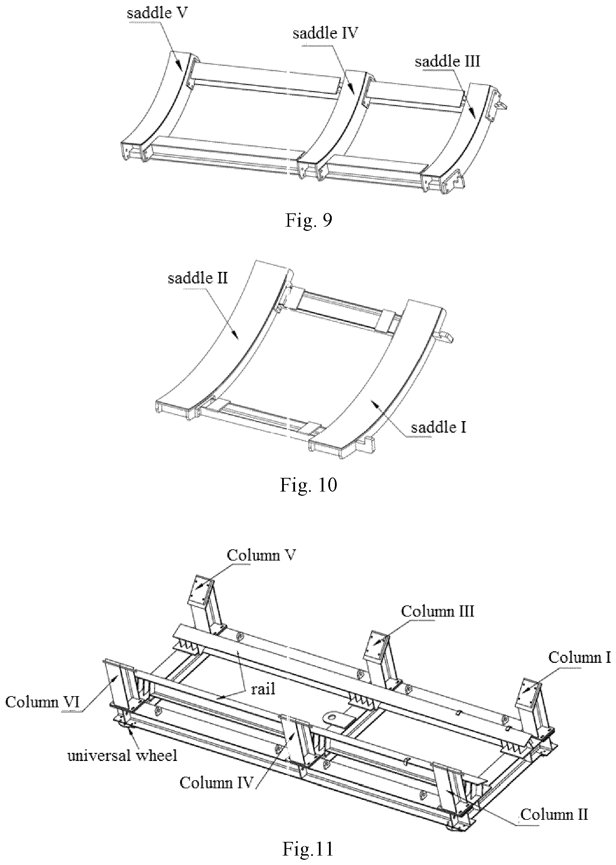

As shown in Fig. 9: the first sliding bracket includes saddle III, saddle IV and saddle V. Saddle III, saddle IV and saddle V are parallel to each other, and are in the shape of an arc, to couple with the shell ring assembly 5. Saddle III, Saddle IV and Saddle V are joined together by two support beams.

As shown in Fig. 10, the second sliding bracket includes a saddle I, a saddle II. The saddle I and the saddle II are also connected together by two support beams, which are also in the shape of an arc.

As shown in Fig. 11, the transfer trolley includes 6 columns, namely Column I, Column II, Column III, Column IV, Column V, and Column VI, the 6 columns are fixed on two parallel rails. The transport trolley is formed with four universal wheels at four bottom corners thereof, to drive the personnel gate to slide, which is convenient and labor-saving.

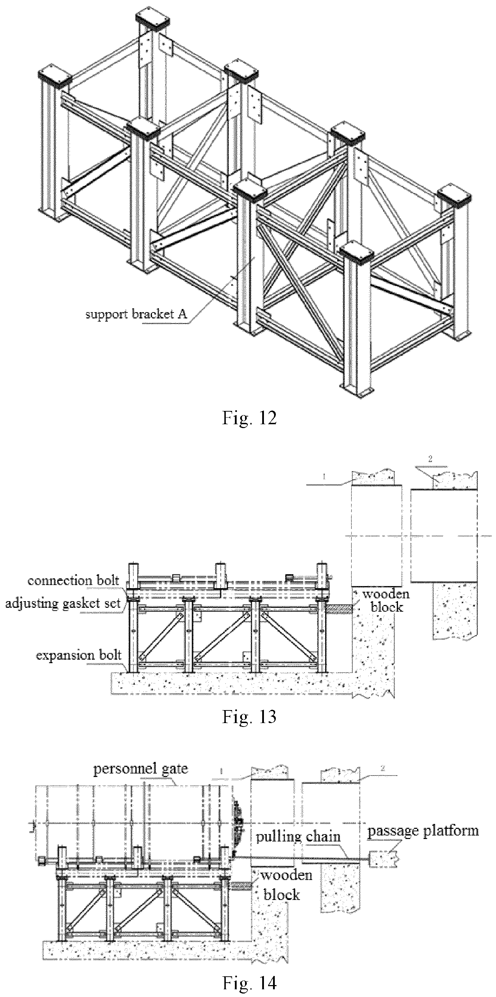

As shown in Fig. 12, the support bracket A is a support frame composed of several sections of steel. The support bracket A is used to support the transfer trolley. At the same time, the personnel gate can be raised to a preset height before installation, to improve the reliability of installation.

Further, referring to Fig. 13, it can be clearly seen that: the support bracket A is supported on the outer containment 1 through the wooden block, to prevent the support bracket from being displaced when the personnel gate is introduced horizontally as a whole, and improve the reliability of the installation. One end of the wooden block is fixedly connected to the outer containment 1, and the other end is fixedly connected to the support bracket. At the same time, by adjusting the adjusting gasket set to adjust the elevation of the transfer trolley, the elevation of the transfer trolley can be adjusted and the applicability of the installation method is enhanced.

When the personnel gate reaches ae preset position and needs to be installed, a passage platform is set on one side of the inner containment 2, and a chain is drawn out from the passage platform. One end of the chain is fixedly connected to the passage platform, and the other end of the chain is fixedly connected to the personnel door. Before pulling, the location of the personnel gate is shown in Fig. 14.

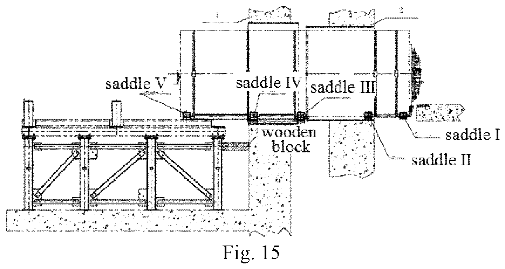

Further, when the chain pulls the personnel gate to the preset position, the position of the personnel gate is shown in Fig. 15. It should be noted that the first sliding bracket and the second sliding bracket need to be removed later to complete the installation.

The installation method of a nuclear power plant personnel gate of the present invention realizes installation by sliding, the operation space is small, the operation period is short, and it has great application significance.

Summarizing the above, the present invention provides a nuclear power plant personnel gate and an installation method thereof, aiming at the technical problem in the prior art that the leakage rate of the nuclear power plant personnel gate does not meet the actual requirements, can obtain the sealing and continuity of the enter and exit passages of the double-layered containment. Due to the arrangement of the cantilever connection support ring plate, the impact of the double-layer containment displacement asynchrony on the on-site installation of the personnel gate can be solved. Due to the arrangement of the displacement compensation assembly, the inner and outer pre-buried penetrating pieces are conneted, to compensate for the displacement deviation of the two penetrating pieces in civil installation, earthquake and other environments, ensure the sealing between the penetrating pieces and the double-layer containment ring corridor, the flexible seals can be welded and clamped on site. The seal and the penetrating piece can be installed separately, and subsequent replacement is more convenient. The intermediate transmission cartridge of the present invention also adopts gear transmission instead of chain transmission, which improves transmission efficiency and greatly improves transmission accuracy. The impact rebound problem during the opening or closing process of the sealing door brought by the chain drive is eliminated. The locking of the sealing door is realized by the locking device, which solves the problem of the accuracy and synchronization of the locking operation of the personnel gate sealing door. Finally, the installation method is proposed, in which the personnel gate equipment is required to complete the equipment assembly and the factory joint adjustment test before leaving the factory, which effectively improves the assembly accuracy of the equipment, avoids the problems of low assembly accuracy, easy rework and unqualified on-site acceptance tests that exist in the on-site segmented installation. The on-site installation operation period of the personnel gate introduced into the installation scheme is short, and the operating space required is small, which facilitates the on-site construction of other items.

The above described embodiments are only preferred embodiments of the present invention, and are not intended to limit the scope of the present invention. Any modification, equivalent replacement and improvement within the principle of the present invention should be included in the protection scope of the present invention, which is defined by the claims.

## Claims

1. A nuclear power plant personnel gate for use in a double-layered containment of a nuclear power plant, the double-layered containment comprising an outer containment (1) and an inner containment (2), the inner containment (2) and the outer containment (1) ) being correspondingly provided with an inner pre-buried penetrating piece (4) and an outer pre-buried penetrating piece (3), and the personnel gate passing through the inner pre-buried penetrating piece (4) and the outer pre-buried penetrating piece (3), the nuclear power plant personnel gate comprising:
a shell ring assembly (5) suitable for passing through and supporting the inner pre-buried penetrating piece (4) and the outer pre-buried penetrating piece (3);
an outer sealing door (6) movably arranged at one side of the shell ring assembly (5) suitable to close to the outer containment (1), for establishing a shielding sealing barrier on the boundary of the outer containment (1);
an inner sealing door (7), movably arranged at one side of the shell ring assembly (5) suitable to close to the inner containment (2), for establishing a pressure-bearing sealing barrier on the boundary of the inner containment (2);
the shell ring assembly (5), the outer sealing door (6), and the inner sealing door (7) jointly enclose a sealed space (8); **characterized by**
an intermediate transmission cartridge (9) detachably disposed in the sealed space (8) and movably connected to the inner sealing door (7) and the outer sealing door (6), for controlling opening and closing of the the inner sealing door (7) and the outer sealing door (6);
wherein the intermediate transmission cartridge (9) has an accommodating space, a multilayer transmission assembly (91) is movably arranged in the accommodating space, and the multilayer transmission assembly (91) is detachably connected to the intermediate transmission cartridge (9);
each multilayer transmission assembly (91) is driven by gears, and the multilayer transmission assembly (91) drives the inner sealing door (7) and the outer sealing door (6), and realizes the opening of the inner sealing door (7) and the outer sealing door (6) by means of mechanical interlocking;
the multilayer transmission assembly (91) comprises: a power source module (911), a drive and pressure balance module (912) and an interlocking mechanism module (913);
the power source module (911) is arranged at a bottom of the intermediate transmission cartridge (9);
an input end of the drive and pressure balance module (912) is connected to the power source module (911), and an output end of the drive and pressure balance module (912) is respectively connected to a pressure balance mechanism, the inner sealing door (7), the outer sealing door (6) and the interlocking mechanism module (913), for transmitting the driving force to the pressure balance mechanism, the inner sealing door (7) and the outer sealing door (6), and transmitting the driving force to the interlocking mechanism module (913);
the interlocking mechanism module (913) is arranged on a top of the intermediate transmission cartridge (9), and controls unilateral or bilateral opening of the inner sealing door (7) and the outer sealing door (6) according to the driving force;
the accommodating space is provided with a first connecting assembly (914) fixed on the bottom of the intermediate transmission cartridge (9) and a second connecting assembly (915) and a third connecting assembly (916) fixed on a side wall of the intermediate transmission cartridge (9), the first connecting assembly (914), the second connecting assembly (915) and the third connecting assembly (916) are respectively detachably connected to the power source module (911), the drive and pressure balance module (912) and the interlocking mechanism module (913).

2. The nuclear power plant personnel gate according to claim 1, **characterized in that**, the nuclear power plant personnel gate comprises a cantilever connection support ring plate (10) and a displacement compensation assembly (11), and the shell ring assembly (5) comprises: an inner shell ring (51), an outer shell ring (52), and an intermediate shell ring (53) fixedly connected to the inner shell ring (51) and the outer shell ring (52), the inner shell ring (51) is connected to the inner sealing door (7), and the outer shell ring (52) is connected to the outer sealing door (6), the inner pre-buried penetrating piece (4) is fixedly connected to the intermediate shell ring (53) through the cantilever connection support ring plate (10), and the outer pre-buried penetrating piece (3) is flexibly and sealingly connected to the intermediate shell ring (53) through the displacement compensation assembly (11).

3. The nuclear power plant personnel gate according to claim 2, **characterized in that**, the cantilever connection support ring plate (10) comprises:
a support plate body (101) having one end fixedly connected to the intermediate shell ring (53) and other end extending upwardly, the support plate body (101) having a height higher than a height of the inner pre-buried penetrating piece (4), and the support plate body (101) being welded and connected to the inner pre-buried penetrating piece (4) through a circumferential weld (103); and
a backing plate (102) arranged below the inner pre-buried penetrating piece (4) and fixedly connected to the support plate body (101).

4. The nuclear power plant personnel gate according to claim 2, **characterized in that**, the displacement compensation assembly (11) comprises a first clamp (111) and a second clamp (112) correspondingly disposed on the intermediate shell ring (53) and the outer pre-buried penetrating piece (3), and a displacement compensation body (113) connecting the intermediate shell ring (53) and the outer pre-buried penetrating piece (3), one end of the displacement compensation body (113) is fixed on the outer pre-buried penetrating piece (3) via the first clamp (111), and the other end of the displacement compensation body (113) is fixed on the intermediate shell ring (53) via the second clamp (112).

5. The nuclear power plant personnel gate according to claim 4, **characterized in that**, the displacement compensation body (113) comprises multiple layers of materials, an inner layer is a reinforcing cloth with high tensile strength, an outer layer is a protective ceramic cloth, the inner layer is assembled by thermal welding at the construction site and the outer layer is assembled by stitching.

6. The nuclear power plant personnel gate according to claim 4, **characterized in that**, the inner layer of the displacement compensation body (113) defines an inner surface, and the inner surface is coated with a high temperature resistant food-grade silica gel coating.

7. The nuclear power plant personnel gate according to claim 1, **characterized in that**, the power source module (911) comprises: a motor (9111), a reducer (9112) connected to an output end of the motor (9111), a first input shaft (9113) and a second input shaft (9114) connected to an output end of the reducer (9112), and a first output shaft (9115) and a second output shaft (9116) corresponding to the first input shaft (9113) and the second input shaft (9114), a first clutch (9117) mounted between the first input shaft (9113) and the first output shaft (9115), a second clutch (9118) mounted between the the second input shaft (9114) and the second output shaft (9116), the first input shaft (9113) and the second input shaft (9114) drive the corresponding first output shaft (9115) and second output shaft (9116) to output driving force or disengage from the first output shaft (9115) and second output shaft (9116) through the first clutch (9117) and the second clutch (9118);
the power source module (911) further comprises: a first driving gear (9119) and a second driving gear (91110) correspondingly sleeved on the first output shaft (9115) and the second output shaft (9116).

8. The nuclear power plant personnel gate according to claim 7, **characterized in that**, the power source module (911) further comprises: a first manual shaft (91111), a second manual shaft (91119), a first manual shaft driven gear (91112) correspondingly connected to the first manual shaft (91111), a first manual shaft driving gear (91113) meshing with the first manual shaft driven gear (91112), the first manual shaft driving gear (91113) is sleeved on the third input shaft (91114), the third input shaft (91114) is also sleeved with a first steering device (91115) and a third clutch (91117), the second manual shaft (91119) is sleeved with a second steering gear (91116) and a fourth clutch (91118), the third input shaft (91114) and the second manual shaft (91119) drive the corresponding first output shaft (9115) and the second output shaft (9116) to output driving force or disengage from the first output shaft (9115) and the second output shaft ( 9116) through the third clutch (91117) and the fourth clutch (91118).

9. The nuclear power plant personnel gate according to claim 8, **characterized in that**, the drive and pressure balance module (912) comprises: a fifth input shaft (9121), a sixth input shaft (9122), and a first driven gear (9123), a first interlock driving gear (9125) and a first pressure driving gear (9127) sleeved on the fifth input shaft (9121); a second driven gear (9124), a second interlock driving gear (9126), a second pressure driving gear (9128) sleeved on the sixth input shaft (9122); the first driven gear (9123) and the second driven gear (9124) mesh with the first driving gear (9119) and the second driving gear (91110); one end of the fifth input shaft (9121) and the sixth input shaft (9122) each is respectively connected to the inner sealing door (7) and the outer sealing door, to drive the opening and closing of the inner sealing door (7) and the outer sealing door (6); the first interlock driving gear (9125) and the second interlock driving gear (9126) are configured to transmit the driving force to the interlocking mechanism module (913).

10. The nuclear power plant personnel gate according to claim 9, **characterized in that**, the drive and pressure balance module (912) further comprises: a first pressure balance shaft (9129) and a second pressure balance shaft (91210), the first pressure driven gear (91211) is sleeved on the first pressure balance shaft (9129), the first pressure driven gear (91211) is meshed with the first pressure driving gear (9127) for transmitting the driving force to the first pressure balance shaft (9129), the second pressure driven gear (91212) is sleeved on the second pressure balance shaft (91210), the second pressure driven gear ( 91212) is meshed with the second pressure driving gear (9128) for transmitting the driving force to the second pressure balance shaft (91210), one end of the first pressure balance shaft (9129) and the second pressure balance shaft (91210) is connected to the pressure balance mechanism, to drive the pressure balance mechanism to open and close under the action of the driving force.

11. The nuclear power plant personnel gate according to claim 10, **characterized in that**, the drive and pressure balance module (912) further comprises: a first safety clutch (91213) sleeved on the fifth input shaft (9121) and a second safety clutch (91214) sleeved on the sixth input shaft (9122), the first safety clutch (91213) is arranged between the first interlock driving gear (9125) and the first driven gear ( 9123), the second safety clutch (91214) is provided between the second interlock driving gear (9126) and the second driven gear (9124), to realize overload protection.

12. The nuclear power plant personnel gate according to claim 11, **characterized in that**, the interlocking mechanism module (913) comprises: a first interlock output shaft (9131), a second interlock output shaft (9132), and a first interlock driven gear (9133) and a second interlock driven gear (9134) correspondingly sleeved on one end of the first interlock output shaft (9131) and the second interlock output shaft (9132), the first interlock driven gear (9133) and the second interlock driven gear (9134) are meshed with the second interlock driving gear (9126) and the first interlock driving gear (9125) respectively, for transmitting the driving force to the first interlock output shaft (9131) and the second interlock output shaft (9132).

13. The nuclear power plant personnel gate according to claim 12, **characterized in that**, the interlocking mechanism module (913) further comprises: an interlock unit (9135), the interlock unit (9135) is connected to the first interlock output shaft (9131) and the second interlock output shaft (9132), the interlock unit (9135) comprises a first spline (91351) arranged on the first interlock output shaft (9131), a second spline (91352) arranged on the second interlock output shaft (9132), the interlock unit (9135) further comprises a spanner (91353), the spanner (91353) is connected to the first spline (91351) and the second spline (91352) respectively, so as to drive the disconnection or combination of the first spline (91351) and the second spline (91352), to realize unilateral or bilateral opening of the inner sealing door (7) and the outer sealing door (6).

14. The nuclear power plant personnel gate according to claim 1, **characterized in that**, the inner sealing door (7) comprises a sealing door body (71) and a door frame (72), the sealing door body (71) is connected to the intermediate transmission cartridge (9), the door frame (72) is fixedly connected to the shell ring assembly (5), and the sealing door body (71) is locked to the door frame (72) via a seal locking device (73), the seal locking device (73) comprises:
a first commutator (731), connected to the intermediate transmission cartridge (9), to change the direction of the driving force output by the intermediate transmission cartridge (9);
a transmission assembly (732), connected to the first commutator (731) for transmitting the driving force transmitted by the first commutator (731);
a locking assembly (733), connected to the transmission assembly (732), for locking the sealing door body (71) to the door frame (72) under the action of the driving force.

15. The nuclear power plant personnel gate according to claim 14, **characterized in that**, the transmission assembly (732) comprises: a first output shaft (7321) connected to the first commutator (731) and a first sprocket wheel (7322) sleeved on the first output shaft (7321), the first sprocket wheel (7322) and the second sprocket (7323) sleeved on the hinge mechanism (7324) are connected via a first chain (7325), the second sprocket wheel (7323) drives the hinge mechanism (7324) to rotate, and a third sprocket wheel (7326) sleeved on the hinge mechanism (7324) rotates under the rotation of the hinge mechanism (7324), the third sprocket wheel (7326) is connected to the fourth sprocket wheel (7327) through a second chain (7328), the fourth sprocket wheel (7327) is connected to the second commutator (7330) through a third output shaft (7329), the second commutator (7330) is sleeved on one end of the horizontal drive link (7331), the third commutator (7332) is sleeved on the other end of the horizontal drive link (7331), the output ends of the third commutator (7332) are respectively connected to the first vertical driving link (7333) and the second vertical driving link (7334), the first vertical driving link (7333) is connected to a fourth commutator (7335), the second vertical driving link (7334) is connected to a fifth commutator (7336), the fourth commutator (7335) and the fifth commutator (7336) are both connected to the locking assembly (733).

16. The nuclear power plant personnel gate according to claim 15, **characterized in that**, the locking assembly (733) comprises: a first telescopic rod (741), a second telescopic rod (742), a first locking lever ( 749), a second locking lever (7410), a first bolt (743) and a second bolt (744) fixed on the sealing door body (71), a third bolt (745) and a fourth door bolt (746) fixed on the door frame (72), a first ball joint (747) connecting the first telescopic rod (741) and the first locking lever (749), a second ball joint (748) connecting the second telescopic rod (742) and the second locking lever (7410), one end of the first telescopic rod (741) is connected to one of the output ends of the fourth commutator (7335), and the other end of the first telescopic rod (741) is connected to the first ball joint (747), the other end of the first ball joint (747) is connected to one end of the first locking lever (749), the other end of the first locking lever (749) slidly extends through the first bolt (743) and the third bolt (745), one end of the second telescopic rod (742) is connected to the other output end of the fourth commutator (7335), the other end of the second telescopic rod (742) is connected to the second ball joint (748), the other end of the second ball joint (748) is connected with one end of the second locking lever (7410), the other end of the second locking lever (7410) slidly extends through the second bolt (744) and the fourth bolt (746), the first telescopic rod (741) and the second telescopic rod (742) can be driven by the driving force to lengthen or shorten, so that the first locking lever (749) extends into or out of the third bolt (745); the second locking lever (7410) extends into or out of the fourth bolt (746).

17. The nuclear power plant personnel gate according to claim 16, **characterized in that**, the locking assembly (733) further comprises: a third telescopic rod (751), a fourth telescopic rod (752), a third locking lever (759), a fourth locking lever (7510), a fifth bolt (753) and a sixth bolt (754) fixed on the sealing door body (71), a seventh bolt (755) and an eighth bolt (756) fixed on the door frame (20), a third ball joint (757) connecting the third telescopic rod (751) and the third locking lever (759), a fourth ball joint (758) connecting the fourth telescopic rod (752) and the fourth locking lever (7510), one end of the third telescopic rod (751) is connected to one of the output ends of the fifth commutator (7336), the other end of the third telescopic rod (751) is connected with the third ball joint (757), the other end of the third ball joint (757) is connected with one end of the third locking lever (759), other end of the third locking lever (759) slidely extends through the fifth bolt (753) and the seventh bolt (755), one end of the fourth telescopic rod (752) is connected to the other output end of the fifth commutator (7336), the other end of the fourth telescopic rod (752) is connected with the fourth ball joint (758), the other end of the fourth ball joint (758) is connected with one end of the fourth locking lever (7510), the other end of the fourth locking lever (7510) slidely extends through the sixth bolt (754) and the eighth bolt (756), and the third telescopic rod (751) and the fourth telescopic rod (752) are driven by the driving force to lengthen or shorten, so that the third locking lever (329) can extend into or out of the seventh bolt (325), and the fourth locking lever (7510) can extend into or out of the eighth bolt (756).

18. The nuclear power plant personnel gate according to claim 1, **characterized in that**, a passage floor (12) is provided in the sealed space (8) for the staff to pass through, and the passage floor (12) has a length no less than that of the sealed spaces (8).

19. An installation method of a nuclear power plant personnel gate according to any one of claims 1 to 18, **characterized in that**, the installation method comprises the steps of:
fixing a support bracket to a predetermined overall horizontal introduction installation position of the nuclear power plant personnel gate via expansion bolts, the support bracket being supported on the outer containment (1) via wooden blocks;
installing a first sliding bracket, a second sliding bracket and a transfer trolley on the support bracket after the support bracket being connected and fixed, adjusting elevation of the transfer trolley by adjusting an adjusting gasket set, and fixing the transfer trolley via connecting bolts after the elevation of the transfer trolley is adjusted;
hoisting the nuclear power plant personnel gate vertically as a whole by an off-site crane, and fixing the nuclear power plant personnel gate to the first sliding bracket and the second sliding bracket by wire ropes;
installing pulling chains, pulling the nuclear power plant personnel gate horizontally to a predetermined installation position, and removing the transfer trolley and the support bracket; and
installing supports of the nuclear power plant personnel gate, and removing the first sliding bracket and the first sliding bracket.

## Patentansprüche

1. Personenschleuse eines Kernkraftwerks zur Verwendung in einem doppelschichtigen Sicherheitsbehälter eines Kernkraftwerks, wobei der doppelschichtige Sicherheitsbehälter einen äußeren Sicherheitsbehälter (1) und einen inneren Sicherheitsbehälter (2) umfasst, wobei der innere Sicherheitsbehälter (2) und der äußere Sicherheitsbehälter (1) ) entsprechend mit einem inneren vorab erdverlegten Durchdringungsstück (4) und einem äußeren vorab erdverlegten Durchdringungsstück (3) versehen sind und wobei die Personenschleuse durch das innere vorab erdverlegte Durchdringungsstück (4) und das äußere vorab erdverlegte Durchdringungsstück (3) verläuft, wobei die Personenschleuse eines Kernkraftwerks Folgendes umfasst:
eine Mantelringbaugruppe (5), die zum Verlaufen durch und Stützen des inneren vorab erdverlegten Durchdringungsstücks (4) und des äußeren vorab erdverlegten Durchdringungsstücks (3) geeignet ist;
eine äußere Dichttür (6), die bewegbar an einer Seite der Mantelringbaugruppe (5) angeordnet und dazu geeignet ist, sich zu dem äußeren Sicherheitsbehälter (1) zu schließen, um eine abschirmende Dichtbarriere an der Grenze des äußeren Sicherheitsbehälters (1) herzustellen;
eine innere Dichttür (7), die bewegbar an einer Seite der Mantelringbaugruppe (5) angeordnet und dazu geeignet ist, sich zu dem inneren Sicherheitsbehälter (2) zu schließen, um eine drucktragende Dichtbarriere an der Grenze des inneren Sicherheitsbehälters (2) herzustellen;
die Mantelringbaugruppe (5), die äußere Dichttür (6) und die innere Dichttür (7) gemeinsam einen abgedichteten Raum (8) einschließen;
**gekennzeichnet durch**
eine Zwischengetriebekassette (9), die abnehmbar in dem abgedichteten Raum (8) angeordnet und bewegbar mit der inneren Dichttür (7) und der äußeren Dichttür (6) verbunden ist, um ein Öffnen und Schließen der der inneren Dichttür (7) und der äußeren Dichttür (6) zu steuern;
wobei die Zwischengetriebekassette (9) einen Aufnahmeraum aufweist, eine Mehrschichtgetriebebaugruppe (91) bewegbar in dem Aufnahmeraum angeordnet ist und die Mehrschichtgetriebebaugruppe (91) abnehmbar mit der Zwischengetriebekassette (9) verbunden ist;
jede Mehrschichtgetriebebaugruppe (91) durch Zahnräder angetrieben wird und die Mehrschichtgetriebebaugruppe (91) die innere Dichttür (7) und die äußere Dichttür (6) antreibt und das Öffnen der inneren Dichttür (7) und der äußeren Dichttür (6) mittels mechanischer Verriegelung realisiert;
die Mehrschichtgetriebebaugruppe (91) Folgendes umfasst: ein Leistungsquellenmodul (911), ein Antriebs- und Druckausgleichsmodul (912) und ein Verriegelungsmechanismusmodul (913);
das Leistungsquellenmodul (911) an einer Unterseite der Zwischengetriebekassette (9) angeordnet ist;
ein Eingangsende des Antriebs- und Druckausgleichsmoduls (912) mit dem Leistungsquellenmodul (911) verbunden ist und ein Ausgangsende des Antriebs- und Druckausgleichsmoduls (912) jeweils mit einem Druckausgleichsmechanismus, der inneren Dichttür (7), der äußeren Dichttür (6) und dem Verriegelungsmechanismusmodul (913) verbunden ist, um die Antriebskraft auf den Druckausgleichsmechanismus, die innere Dichttür (7) und die äußere Dichttür (6) zu übertragen und die Antriebskraft auf das Verriegelungsmechanismusmodul (913) zu übertragen;
das Verriegelungsmechanismusmodul (913) an einer Oberseite der Zwischengetriebekassette (9) angeordnet ist und einseitiges oder beidseitiges Öffnen der inneren Dichttür (7) und der äußeren Dichttür (6) gemäß der Antriebskraft steuert;
der Aufnahmeraum mit einer ersten Verbindungsbaugruppe (914), die an der Unterseite der Zwischengetriebekassette (9) fixiert ist, und einer zweiten Verbindungsbaugruppe (915) und einer dritten Verbindungsbaugruppe (916), die an einer Seitenwand der Zwischengetriebekassette (9) fixiert sind, versehen ist, die erste Verbindungsbaugruppe (914), die zweite Verbindungsbaugruppe (915) und die dritte Verbindungsbaugruppe (916) jeweils abnehmbar mit dem Leistungsquellenmodul (911), dem Antriebs- und Druckausgleichsmodul (912) und dem Verriegelungsmechanismusmodul (913) verbunden sind.

2. Personenschleuse eines Kernkraftwerks nach Anspruch 1, **dadurch gekennzeichnet, dass** die Personenschleuse eines Kernkraftwerks eine freitragende Verbindungsstützringplatte (10) und eine Verschiebungskompensationsbaugruppe (11) umfasst und die Mantelringbaugruppe (5) Folgendes umfasst: einen inneren Mantelring (51), einen äußeren Mantelring (52) und einen Zwischenmantelring (53), der fest mit dem inneren Mantelring (51) und dem äußeren Mantelring (52) verbunden ist, der innere Mantelring (51) mit der inneren Dichttür (7) verbunden ist und der äußere Mantelring (52) mit der äußeren Dichttür (6) verbunden ist, das innere vorab erdverlegte Durchdringungsstück (4) durch die freitragende Verbindungsstützringplatte (10) fest mit dem Zwischenmantelring (53) verbunden ist und das äußere vorab erdverlegte Durchdringungsstück (3) durch die Verschiebungskompensationsbaugruppe (11) flexibel und abdichtend mit dem Zwischenmantelring (53) verbunden ist.

3. Personenschleuse eines Kernkraftwerks nach Anspruch 2, **dadurch gekennzeichnet, dass** die freitragende Verbindungsstützringplatte (10) Folgendes umfasst:
einen Stützplattenkörper (101), von dem ein Ende fest mit dem Zwischenmantelring (53) verbunden ist und sich das andere Ende nach oben erstreckt, wobei der Stützplattenkörper (101) eine Höhe aufweist, die höher als eine Höhe des inneren vorab erdverlegten Durchdringungsstücks (4) ist, und wobei der Stützplattenkörper (101) durch eine Umfangsschweißnaht (103) mit dem inneren vorab erdverlegten Durchdringungsstück (4) verschweißt und verbunden ist; und
eine Trägerplatte (102), die unter dem inneren vorab erdverlegten Durchdringungsstück (4) angeordnet und fest mit dem Stützplattenkörper (101) verbunden ist.

4. Personenschleuse eines Kernkraftwerks nach Anspruch 2, **dadurch gekennzeichnet, dass** die Verschiebungskompensationsbaugruppe (11) eine erste Klammer (111) und eine zweite Klammer (112), die entsprechend an dem Zwischenmantelring (53) und dem äußeren vorab erdverlegten Durchdringungsstück (3) angeordnet sind, und einen Verschiebungskompensationskörper (113) umfasst, der den Zwischenmantelring (53) und das äußere vorab erdverlegte Durchdringungsstück (3) verbindet, ein Ende des Verschiebungskompensationskörpers (113) über die erste Klammer (111) an dem äußeren vorab erdverlegten Durchdringungsstück (3) fixiert ist und das andere Ende des Verschiebungskompensationskörpers (113) über die zweite Klammer (112) an dem Zwischenmantelring (53) fixiert ist.

5. Personenschleuse eines Kernkraftwerks nach Anspruch 4, **dadurch gekennzeichnet, dass** der Verschiebungskompensationskörper (113) mehrere Schichten von Materialien umfasst, eine innere Schicht ein Verstärkungsgewebe mit hoher Zugfestigkeit ist, eine äußere Schicht ein schützendes Keramikgewebe ist, die innere Schicht durch thermisches Schweißen auf der Baustelle zusammengefügt ist und die äußere Schicht durch Nähen zusammengefügt ist.

6. Personenschleuse eines Kernkraftwerks nach Anspruch 4, **dadurch gekennzeichnet, dass** die innere Schicht des Verschiebungskompensationskörpers (113) eine innere Oberfläche definiert und die innere Oberfläche mit einer hochtemperaturbeständigen lebensmittelechten Kieselgelbeschichtung beschichtet ist.

7. Personenschleuse eines Kernkraftwerks nach Anspruch 1, **dadurch gekennzeichnet, dass** das Leistungsquellenmodul (911) Folgendes umfasst: einen Motor (9111), eine Reduzierung (9112), die mit einem Ausgangsende des Motors (9111) verbunden ist, eine erste Eingangswelle (9113) und eine zweite Eingangswelle (9114), die mit einem Ausgangsende der Reduzierung (9112) verbunden sind, und eine erste Ausgangswelle (9115) und eine zweite Ausgangswelle (9116), die der ersten Eingangswelle (9113) und der zweiten Eingangswelle (9114) entsprechen, eine erste Kupplung (9117), die zwischen der ersten Eingangswelle (9113) und der ersten Ausgangswelle (9115) montiert ist, eine zweite Kupplung (9118), die zwischen der der zweiten Eingangswelle (9114) und der zweiten Ausgangswelle (9116) montiert ist, die erste Eingangswelle (9113) und die zweite Eingangswelle (9114) die entsprechende erste Ausgangswelle (9115) und zweite Ausgangswelle (9116) antreiben, um eine Antriebskraft auszugeben oder sich von der ersten Ausgangswelle (9115) und zweiten Ausgangswelle (9116) durch die erste Kupplung (9117) und die zweite Kupplung (9118) zu lösen;
das Leistungsquellenmodul (911) ferner Folgendes umfasst: ein erstes Antriebszahnrad (9119) und ein zweites Antriebszahnrad (91110), die entsprechend auf die erste Ausgangswelle (9115) und die zweite Ausgangswelle (9116) aufgesteckt sind.

8. Personenschleuse eines Kernkraftwerks nach Anspruch 7, **dadurch gekennzeichnet, dass** das Leistungsquellenmodul (911) ferner Folgendes umfasst: eine erste manuelle Welle (91111), eine zweite manuelle Welle (91119), ein Abtriebszahnrad (91112) der ersten manuellen Welle, das entsprechend mit der ersten manuellen Welle (91111) verbunden ist, ein Antriebszahnrad (91113) der ersten manuellen Welle, das mit dem Abtriebszahnrad (91112) der ersten manuellen Welle kämmt, das Antriebszahnrad (91113) der ersten manuellen Welle auf die dritte Eingangswelle (91114) aufgesteckt ist, auf die dritte Eingangswelle (91114) auch eine erste Lenkvorrichtung (91115) und eine dritte Kupplung (91117) aufgesteckt sind, auf die zweite manuelle Welle (91119) ein zweites Lenkzahnrad (91116) und eine vierte Kupplung (91118) aufgesteckt sind, die dritte Eingangswelle (91114) und die zweite manuelle Welle (91119) die entsprechende erste Ausgangswelle (9115) und die zweite Ausgangswelle (9116) antreiben, um eine Antriebskraft auszugeben oder sich von der ersten Ausgangswelle (9115) und der zweiten Ausgangswelle (9116) durch die dritte Kupplung (91117) und die vierte Kupplung (91118) zu lösen.

9. Personenschleuse eines Kernkraftwerks nach Anspruch 8, **dadurch gekennzeichnet, dass** das Antriebs- und Druckausgleichsmodul (912) Folgendes umfasst: eine fünfte Eingangswelle (9121), eine sechste Eingangswelle (9122) und ein erstes Abtriebszahnrad (9123), ein erstes Verriegelungsantriebszahnrad (9125) und ein erstes Druckantriebszahnrad (9127), die auf die fünfte Eingangswelle (9121) aufgesteckt sind; ein zweites Abtriebszahnrad (9124), ein zweites Verriegelungsantriebszahnrad (9126), ein zweites Druckantriebszahnrad (9128), die auf die sechste Eingangswelle (9122) aufgesteckt sind; das erste Abtriebszahnrad (9123) und das zweite Abtriebszahnrad (9124) mit dem ersten Antriebszahnrad (9119) und dem zweiten Antriebszahnrad (91110) kämmen; ein Ende der fünften Eingangswelle (9121) und der sechsten Eingangswelle (9122) jeweils mit der inneren Dichttür (7) bzw. der äußeren Dichttür verbunden ist, um das Öffnen und Schließen der inneren Dichttür (7) und der äußeren Dichttür (6) anzutreiben; das erste Verriegelungsantriebszahnrad (9125) und das zweite Verriegelungsantriebszahnrad (9126) dazu konfiguriert sind, die Antriebskraft auf das Verriegelungsmechanismusmodul (913) zu übertragen.

10. Personenschleuse eines Kernkraftwerks nach Anspruch 9, **dadurch gekennzeichnet, dass** das Antriebs- und Druckausgleichsmodul (912) ferner Folgendes umfasst: eine erste Druckausgleichswelle (9129) und eine zweite Druckausgleichswelle (91210), das erste Druckabtriebszahnrad (91211) auf die erste Druckausgleichswelle (9129) aufgesteckt ist, das erste Druckabtriebszahnrad (91211) mit dem ersten Druckabtriebszahnrad (9127) kämmt, um die Antriebskraft auf die erste Druckausgleichswelle (9129) zu übertragen, das zweite Druckabtriebszahnrad (91212) auf die zweite Druckausgleichswelle (91210) aufgesteckt ist, das zweite Druckabtriebszahnrad (91212) mit dem zweiten Druckantriebszahnrad (9128) kämmt, um die Antriebskraft auf die zweite Druckausgleichswelle (91210) zu übertragen, ein Ende der ersten Druckausgleichswelle (9129) und der zweiten Druckausgleichswelle (91210) mit dem Druckausgleichsmechanismus verbunden ist, um den Druckausgleichsmechanismus anzutreiben, damit er sich unter der Wirkung der Antriebskraft öffnet und schließt.

11. Personenschleuse eines Kernkraftwerks nach Anspruch 10, **dadurch gekennzeichnet, dass** das Antriebs- und Druckausgleichsmodul (912) ferner Folgendes umfasst: eine erste Sicherheitskupplung (91213), die auf die fünfte Eingangswelle (9121) aufgesteckt ist, und eine zweite Sicherheitskupplung (91214), die auf die sechste Eingangswelle (9122) aufgesteckt ist, die erste Sicherheitskupplung (91213) zwischen dem ersten Verriegelungsantriebszahnrad (9125) und dem ersten Abtriebszahnrad (9123) angeordnet ist, die zweite Sicherheitskupplung (91214) zwischen dem zweiten Verriegelungsantriebszahnrad (9126) und dem zweiten Abtriebszahnrad (9124) bereitgestellt ist, um Überlastungsschutz zu realisieren.

12. Personenschleuse eines Kernkraftwerks nach Anspruch 11, **dadurch gekennzeichnet, dass** das Verriegelungsmechanismusmodul (913) Folgendes umfasst: eine erste Verriegelungsausgangswelle (9131), eine zweite Verriegelungsausgangswelle (9132) und ein erstes Verriegelungsabtriebszahnrad (9133) und ein zweites Verriegelungsabtriebszahnrad (9134), die entsprechend auf ein Ende der ersten Verriegelungsausgangswelle (9131) und der zweiten Verriegelungsausgangswelle (9132) aufgesteckt sind, das erste Verriegelungsabtriebszahnrad (9133) und das zweite Verriegelungsabtriebszahnrad (9134) mit dem zweiten Verriegelungsantriebszahnrad (9126) bzw. dem ersten Verriegelungsantriebszahnrad (9125) kämmen, um die Antriebskraft auf die erste Verriegelungsausgangswelle (9131) und die zweite Verriegelungsausgangswelle (9132) zu übertragen.

13. Personenschleuse eines Kernkraftwerks nach Anspruch 12, **dadurch gekennzeichnet, dass** das Verriegelungsmechanismusmodul (913) ferner Folgendes umfasst: eine Verriegelungseinheit (9135), die Verriegelungseinheit (9135) mit der ersten Verriegelungsausgangswelle (9131) und der zweiten Verriegelungsausgangswelle (9132) verbunden ist, die Verriegelungseinheit (9135) einen ersten Keil (91351), der an der ersten Verriegelungsausgangswelle (9131) angeordnet ist, einen zweiten Keil (91352), der an der zweiten Verriegelungsausgangswelle (9132) angeordnet ist, umfasst, die Verriegelungseinheit (9135) ferner einen Schlüssel (91353) umfasst, der Schlüssel (91353) mit dem ersten Keil (91351) bzw. dem zweiten Keil (91352) verbunden ist, um die Trennung oder Kombination des ersten Keils (91351) und des zweiten Keils (91352) anzutreiben, um ein einseitiges oder beidseitiges Öffnen der inneren Dichttür (7) und der äußeren Dichttür (6) zu realisieren.

14. Personenschleuse eines Kernkraftwerks nach Anspruch 1, **dadurch gekennzeichnet, dass** die innere Dichttür (7) einen Dichttürkörper (71) und einen Türrahmen (72) umfasst, der Dichttürkörper (71) mit der Zwischengetriebekassette (9) verbunden ist, der Türrahmen (72) fest mit der Mantelringbaugruppe (5) verbunden ist und der Dichttürkörper (71) über eine Dichtungsarretiervorrichtung (73) an dem Türrahmen (72) arretiert ist, die Dichtungsarretiervorrichtung (73) Folgendes umfasst:
einen ersten Kommutator (731), der mit der Zwischengetriebekassette (9) verbunden ist, um die Richtung der durch die Zwischengetriebekassette (9) ausgegebenen Antriebskraft zu ändern;
eine Übertragungsbaugruppe (732), die mit dem ersten Kommutator (731) verbunden ist, um die durch den ersten Kommutator (731) übertragene Antriebskraft zu übertragen;
eine Arretierbaugruppe (733), die mit der Übertragungsbaugruppe (732) verbunden ist, um den Dichttürkörper (71) unter der Wirkung der Antriebskraft an dem Türrahmen (72) zu arretieren.

15. Personenschleuse eines Kernkraftwerks nach Anspruch 14, **dadurch gekennzeichnet, dass** die Übertragungsbaugruppe (732) Folgendes umfasst: eine erste Ausgangswelle (7321), die mit dem ersten Kommutator (731) verbunden ist, und ein erstes Kettenrad (7322), das auf die erste Ausgangswelle (7321) aufgesteckt ist, das erste Kettenrad (7322) und das zweite Kettenrad (7323), das auf den Scharniermechanismus (7324) aufgesteckt ist, über eine erste Kette (7325) verbunden sind, das zweite Kettenrad (7323) den Scharniermechanismus (7324) antreibt, damit er sich dreht, und sich ein drittes Kettenrad (7326), das auf den Scharniermechanismus (7324) aufgesteckt ist, unter der Drehung des Scharniermechanismus (7324) dreht, das dritte Kettenrad (7326) durch eine zweite Kette (7328) mit dem vierten Kettenrad (7327) verbunden ist, das vierte Kettenrad (7327) durch eine dritte Ausgangswelle (7329) mit dem zweiten Kommutator (7330) verbunden ist, der zweite Kommutator (7330) auf ein Ende des horizontalen Antriebsglieds (7331) aufgesteckt ist, der dritte Kommutator (7332) auf das andere Ende des horizontalen Antriebsglieds (7331) aufgesteckt ist, die Ausgangsenden des dritten Kommutators (7332) mit dem ersten vertikalen Antriebsglied (7333) bzw. dem zweiten vertikalen Antriebsglied (7334) verbunden sind, das erste vertikale Antriebsglied (7333) mit einem vierten Kommutator (7335) verbunden ist, das zweite vertikale Antriebsglied (7334) mit einem fünften Kommutator (7336) verbunden ist, der vierte Kommutator (7335) und der fünfte Kommutator (7336) beide mit der Arretierbaugruppe (733) verbunden sind.

16. Personenschleuse eines Kernkraftwerks nach Anspruch 15, **dadurch gekennzeichnet, dass** die Arretierbaugruppe (733) Folgendes umfasst: eine erste Teleskopstange (741), eine zweite Teleskopstange (742), einen ersten Arretierhebel (749), einen zweiten Arretierhebel (7410), einen ersten Bolzen (743) und einen zweiten Bolzen (744), die an dem Dichttürkörper (71) fixiert sind, einen dritten Bolzen (745) und einen vierten Türbolzen (746), die an dem Türrahmen (72) fixiert sind, ein erstes Kugelgelenk (747), das die erste Teleskopstange (741) und den ersten Arretierhebel (749) verbindet, ein zweites Kugelgelenk (748), das die zweite Teleskopstange (742) und den zweiten Arretierhebel (7410) verbindet, ein Ende der ersten Teleskopstange (741) mit einem der Ausgangsenden des vierten Kommutators (7335) verbunden ist und das andere Ende der ersten Teleskopstange (741) mit dem ersten Kugelgelenk (747) verbunden ist, das andere Ende des ersten Kugelgelenks (747) mit einem Ende des ersten Arretierhebels (749) verbunden ist, sich das andere Ende des ersten Arretierhebels (749) gleitend durch den ersten Bolzen (743) und den dritten Bolzen (745) erstreckt, ein Ende der zweiten Teleskopstange (742) mit dem anderen Ausgangsende des vierten Kommutators (7335) verbunden ist, das andere Ende der zweiten Teleskopstange (742) mit dem zweiten Kugelgelenk (748) verbunden ist, das andere Ende des zweiten Kugelgelenks (748) mit einem Ende des zweiten Arretierhebels (7410) verbunden ist, sich das andere Ende des zweiten Arretierhebels (7410) gleitend durch den zweiten Bolzen (744) und den vierten Bolzen (746) erstreckt, die erste Teleskopstange (741) und die zweite Teleskopstange (742) durch die Antriebskraft angetrieben werden können, damit sie sich verlängern oder verkürzen, sodass sich der erste Arretierhebel (749) in den dritten Bolzen (745) hinein oder aus diesem heraus erstreckt; sich der zweite Arretierhebel (7410) in den vierten Bolzen (746) hinein oder aus diesem heraus erstreckt.

17. Personenschleuse eines Kernkraftwerks nach Anspruch 16, **dadurch gekennzeichnet, dass** die Arretierbaugruppe (733) ferner Folgendes umfasst: eine dritte Teleskopstange (751), eine vierte Teleskopstange (752), einen dritten Arretierhebel (759), einen vierten Arretierhebel (7510), einen fünften Bolzen (753) und einen sechsten Bolzen (754), die an dem Dichttürkörper (71) fixiert sind, einen siebten Bolzen (755) und einen achten Bolzen (756), die an dem Türrahmen (20) fixiert sind, ein drittes Kugelgelenk (757), das die dritte Teleskopstange (751) und den dritten Arretierhebel (759) verbindet, ein viertes Kugelgelenk (758), das die vierte Teleskopstange (752) und den vierten Arretierhebel (7510) verbindet, ein Ende der dritten Teleskopstange (751) mit einem der Ausgangsenden des fünften Kommutators (7336) verbunden ist, das andere Ende der dritten Teleskopstange (751) mit dem dritten Kugelgelenk (757) verbunden ist, das andere Ende des dritten Kugelgelenks (757) mit einem Ende des dritten Arretierhebels (759) verbunden ist, sich das andere Ende des dritten Arretierhebels (759) gleitend durch den fünften Bolzen (753) und den siebten Bolzen (755) erstreckt, ein Ende der vierten Teleskopstange (752) mit dem anderen Ausgangsende des fünften Kommutators (7336) verbunden ist, das andere Ende der vierten Teleskopstange (752) mit dem vierten Kugelgelenk (758) verbunden ist, das andere Ende des vierten Kugelgelenks (758) mit einem Ende des vierten Arretierhebels (7510) verbunden ist, sich das andere Ende des vierten Arretierhebels (7510) gleitend durch den sechsten Bolzen (754) und den achten Bolzen (756) erstreckt und die dritte Teleskopstange (751) und die vierte Teleskopstange (752) durch die Antriebskraft angetrieben werden, damit sie sich verlängern oder verkürzen, sodass sich der dritte Arretierhebel (329) in den siebten Bolzen (325) hinein oder aus diesem heraus erstrecken kann und sich der vierte Arretierhebel (7510) in den achten Bolzen (756) hinein oder aus diesem heraus erstrecken kann.

18. Personenschleuse eines Kernkraftwerks nach Anspruch 1, **dadurch gekennzeichnet, dass** ein Durchgangsboden (12) in dem abgedichteten Raum (8) bereitgestellt ist, durch den das Personal hindurchgehen kann, und der Durchgangsboden (12) eine Länge aufweist, die nicht kleiner ist als die der abgedichteten Räume (8).

19. Installationsverfahren einer Personenschleuse eines Kernkraftwerks nach einem der Ansprüche 1 bis 18, **dadurch gekennzeichnet, dass** das Installationsverfahren die folgenden Schritte umfasst:
Fixieren einer Stützhalterung an einer vorbestimmten insgesamt horizontalen Einführungsinstallationsposition der Personenschleuse eines Kernkraftwerks über Expansionsbolzen, wobei die Stützhalterung über Holzblöcke an dem äußeren Sicherheitsbehälter (1) gestützt ist;
Installieren einer ersten Gleithalterung, einer zweiten Gleithalterung und eines Transferwagens an der Stützhalterung, nachdem die Stützhalterung verbunden und fixiert worden ist, Einstellen einer Höhe des Transferwagens durch Einstellen eines Einstelldichtungssatzes und Fixieren des Transferwagens über Verbindungsbolzen, nachdem die Höhe des Transferwagens eingestellt worden ist;
Heben der Personenschleuse eines Kernkraftwerks vertikal als Ganzes durch einen externen Kran und Fixieren der Personenschleuse eines Kernkraftwerks an der ersten Gleithalterung und der zweiten Gleithalterung durch Drahtseile;
Installieren von Zugketten, horizontales Ziehen der Personenschleuse eines Kernkraftwerks in eine vorbestimmte Installationsposition und Entfernen des Transferwagens und der Stützhalterung; und
Installieren von Stützen der Personenschleuse eines Kernkraftwerks und Entfernen der ersten Gleithalterung und der ersten Gleithalterung.

## Revendications

1. Porte de personnel de centrale nucléaire destinée à être utilisée dans une enceinte à double parois d'une centrale nucléaire, l'enceinte à double parois comprenant une enceinte externe (1) et une enceinte interne (2), l'enceinte interne (2) et l'enceinte externe (1) étant pourvues de manière correspondante d'une pièce de traversée pré-enterrée interne (4) et d'une pièce de traversée pré-enterrée externe (3), et la porte de personnel traversant la pièce de traversée pré-enterrée interne (4) et la pièce de traversée pré-enterrée externe (3), la porte de personnel de centrale nucléaire comprenant :
un ensemble anneau de coque (5) apte à traverser et supporter la pièce de traversée pré-enterrée interne (4) et la pièce de traversée pré-enterrée externe (3) ;
une porte d'étanchéité externe (6) agencée de manière mobile d'un côté de l'ensemble anneau de coque (5) apte à venir en fermeture contre l'enceinte externe (1), afin d'établir une barrière d'étanchéité de blindage à la limite de l'enceinte externe (1) ;
une porte d'étanchéité interne (7), agencée de manière mobile d'un côté de l'ensemble anneau de coque (5) apte à venir en fermeture contre l'enceinte interne (2), afin d'établir une barrière d'étanchéité résistante à la pression à la limite de l'enceinte interne (2) ;
l'ensemble anneau de coque (5), la porte d'étanchéité externe (6) et la porte d'étanchéité interne (7) enferment conjointement un espace étanche (8) ;
**caractérisée par** une cartouche de transmission intermédiaire (9) disposée de manière amovible dans l'espace étanche (8) et connectée de manière mobile à la porte d'étanchéité interne (7) et à la porte d'étanchéité externe (6), afin de commander l'ouverture et la fermeture de la porte d'étanchéité interne (7) et de la porte d'étanchéité externe (6) ;
dans laquelle la cartouche de transmission intermédiaire (9) a un espace de réception, un ensemble de transmission multicouche (91) est disposé de manière mobile dans l'espace de réception, et l'ensemble de transmission multicouche (91) est connecté de manière amovible à la cartouche de transmission intermédiaire (9) ;
chaque ensemble de transmission multicouche (91) est entraîné par des engrenages, et l'ensemble de transmission multicouche (91) entraîne la porte d'étanchéité interne (7) et la porte d'étanchéité externe (6), et réalise l'ouverture de la porte d'étanchéité interne (7) et de la porte d'étanchéité externe (6) au moyen d'un interverrouillage mécanique ;
l'ensemble de transmission multicouche (91) comprend : un module de source d'alimentation (911), un module d'entraînement et d'équilibrage de pression (912) et un module de mécanisme d'interverrouillage (913) ;
le module de source d'alimentation (911) est agencé au niveau d'un fond de la cartouche de transmission intermédiaire (9) ;
une extrémité d'entrée du module d'entraînement et d'équilibrage de pression (912) est connectée au module de source d'alimentation (911), et une extrémité de sortie du module d'entraînement et d'équilibrage de pression (912) est respectivement connectée à un mécanisme d'équilibrage de pression, à la porte d'étanchéité interne (7), à la porte d'étanchéité externe (6) et au module de mécanisme d'interverrouillage (913), afin de transmettre la force d'entraînement au mécanisme d'équilibrage de pression, à la porte d'étanchéité interne (7) et à la porte d'étanchéité externe (6), et transmettre la force d'entraînement au module de mécanisme d'interverrouillage (913) ;
le module de mécanisme d'interverrouillage (913) est agencé sur une partie supérieure de la cartouche de transmission intermédiaire (9), et commande l'ouverture unilatérale ou bilatérale de la porte d'étanchéité interne (7) et de la porte d'étanchéité externe (6) en fonction de la force d'entraînement ;
l'espace de réception est pourvu d'un premier ensemble de connexion (914) fixé sur le fond de la cartouche de transmission intermédiaire (9) et d'un deuxième ensemble de connexion (915) et d'un troisième ensemble de connexion (916) fixés sur une paroi latérale de la cartouche de transmission intermédiaire (9), le premier ensemble de connexion (914), le deuxième ensemble de connexion (915) et le troisième ensemble de connexion (916) sont respectivement connectés de manière amovible au module de source d'alimentation (911), au module d'entraînement et d'équilibrage de pression (912) et au module de mécanisme d'interverrouillage (913).

2. Porte de personnel de centrale nucléaire selon la revendication 1, **caractérisée en ce que**, la porte de personnel de centrale nucléaire comprend une plaque annulaire de support de connexion en porte-à-faux (10) et un ensemble de compensation de déplacement (11), et l'ensemble anneau de coque (5) comprend : un anneau de coque interne (51), un anneau de coque externe (52) et un anneau de coque intermédiaire (53) connectés de manière fixe à l'anneau de coque interne (51) et à l'anneau de coque externe (52), l'anneau de coque interne (51) est connecté à la porte d'étanchéité interne (7), et l'anneau de coque externe (52) est connecté à la porte d'étanchéité externe (6), la pièce de traversée pré-enterrée interne (4) est connectée de manière fixe à l'anneau de coque intermédiaire (53) via la plaque annulaire de support de liaison en porte-à-faux (10), et la pièce de traversée pré-enterrée externe (3) est connectée de manière flexible et étanche à l'anneau de coque intermédiaire (53) via l'ensemble de compensation de déplacement (11).

3. Porte de personnel de centrale nucléaire selon la revendication 2, **caractérisée en ce que**, la plaque annulaire de support de connexion en porte-à-faux (10) comprend :
un corps de plaque de support (101) ayant une extrémité connectée de manière fixe à l'anneau de coque intermédiaire (53) et une autre extrémité s'étendant vers le haut, le corps de plaque de support (101) ayant une hauteur supérieure à une hauteur de la pièce de traversée pré-enterrée interne (4), et le corps de plaque de support (101) étant soudé et connecté à la pièce de traversée pré-enterrée interne (4) par une soudure circonférentielle (103) ; et
une plaque de support (102) disposée sous la pièce de traversée pré-enterrée interne (4) et connectée de manière fixe au corps de plaque de support (101).

4. Porte de personnel de centrale nucléaire selon la revendication 2, **caractérisée en ce que**, l'ensemble de compensation de déplacement (11) comprend une première pince (111) et une deuxième pince (112) disposées de manière correspondante sur l'anneau de coque intermédiaire (53) et la pièce de pénétration pré-enterrée externe (3), et un corps de compensation de déplacement (113) reliant l'anneau de coque intermédiaire (53) et la pièce de pénétration pré-enterrée externe (3), une extrémité du corps de compensation de déplacement (113) est fixée sur la pièce de pénétration pré-enterrée externe (3) via la première pince (111), et l'autre extrémité du corps de compensation de déplacement (113) est fixée sur l'anneau de coque intermédiaire (53) via la deuxième pince (112).

5. Porte de personnel de centrale nucléaire selon la revendication 4, **caractérisée en ce que**, le corps de compensation de déplacement (113) comprend de multiples couches de matériaux, une couche interne est un tissu de renforcement avec une résistance à la traction élevée, une couche externe est un tissu céramique de protection, la couche interne est assemblée par soudage thermique sur le site de construction et la couche externe est assemblée par couture.

6. Porte de personnel de centrale nucléaire selon la revendication 4, **caractérisée en ce que**, la couche interne du corps de compensation de déplacement (113) définit une surface interne, et la surface interne est revêtue d'un revêtement de gel de silice de qualité alimentaire résistant à haute température.

7. Porte de personnel de centrale nucléaire selon la revendication 1, **caractérisée en ce que**, le module de source d'alimentation (911) comprend : un moteur (9111), un réducteur (9112) connecté à une extrémité de sortie du moteur (9111), un premier arbre d'entrée (9113) et un deuxième arbre d'entrée (9114) connectés à une extrémité de sortie du réducteur (9112), et un premier arbre de sortie (9115) et un deuxième arbre de sortie (9116) correspondant au premier arbre d'entrée (9113) et au deuxième arbre d'entrée (9114), un premier embrayage (9117) monté entre le premier arbre d'entrée (9113) et le premier arbre de sortie (9115), un deuxième embrayage (9118) monté entre le deuxième arbre d'entrée (9114) et le deuxième arbre de sortie (9116), le premier arbre d'entrée (9113) et le deuxième arbre d'entrée (9114) entraînent le premier arbre de sortie (9115) et le deuxième arbre de sortie (9116) correspondants pour produire en sortie une force d'entraînement ou se désengagent du premier arbre de sortie (9115) et du deuxième arbre de sortie (9116) via le premier embrayage (9117) et le deuxième embrayage (9118) ;
le module de source d'alimentation (911) comprend en outre : une première roue menante (9119) et une deuxième roue menante (91110) manchonnées de manière correspondante sur le premier arbre de sortie (9115) et le deuxième arbre de sortie (9116).

8. Porte de personnel de centrale nucléaire selon la revendication 7, **caractérisée en ce que**, le module de source d'alimentation (911) comprend en outre : un premier arbre manuel (91111), un deuxième arbre manuel (91119), une première roue menée d'arbre manuel (91112) connectée de manière correspondante au premier arbre manuel (91111), une première roue menante d'arbre manuel (91113) s'engrenant avec la première roue menée d'arbre manuel (91112), la première roue menante d'arbre manuel (91113) est manchonnée sur le troisième arbre d'entrée (91114), le troisième arbre d'entrée (91114) est également manchonné avec un premier dispositif de direction (91115) et un troisième embrayage (91117), le deuxième arbre manuel (91119) est manchonné avec une deuxième roue de direction (91116) et un quatrième embrayage (91118), le troisième arbre d'entrée (91114) et le deuxième arbre manuel (91119) entraînent le premier arbre de sortie correspondant (9115) et le deuxième arbre de sortie (9116) pour produire en sortie une force d'entraînement ou se désengager du premier arbre de sortie (9115) et du deuxième arbre de sortie (9116) par l'intermédiaire du troisième embrayage (91117) et du quatrième embrayage (91118).

9. Porte de personnel de centrale nucléaire selon la revendication 8, **caractérisée en ce que** le module d'entraînement et d'équilibrage de pression (912) comprend : un cinquième arbre d'entrée (9121), un sixième arbre d'entrée (9122), et une première roue menée (9123), une première roue menante d'interverrouillage (9125) et une première roue menante par pression (9127) manchonnée sur le cinquième arbre d'entrée (9121) ; une deuxième roue menée (9124), une deuxième roue menante d'interverrouillage (9126), une deuxième roue menante par pression (9128) manchonnée sur le sixième arbre d'entrée (9122) ; la première roue menée (9123) et la deuxième roue menée (9124) s'engrènent avec la première roue menante (9119) et la deuxième roue menante (91110) ; une extrémité du cinquième arbre d'entrée (9121) et du sixième arbre d'entrée (9122) sont chacune respectivement connectées à la porte d'étanchéité interne (7) et à la porte d'étanchéité externe, pour entraîner l'ouverture et la fermeture de la porte d'étanchéité interne (7) et de la porte d'étanchéité externe (6) ; la première roue menante d'interverrouillage (9125) et la deuxième roue menante d'interverrouillage (9126) sont configurés pour transmettre la force d'entraînement au module de mécanisme d'interverrouillage (913).

10. Porte de personnel de centrale nucléaire selon la revendication 9, **caractérisée en ce que**, le module d'entraînement et d'équilibrage de pression (912) comprend en outre : un premier arbre d'équilibrage de pression (9129) et un deuxième arbre d'équilibrage de pression (91210), la première roue menée par pression (91211) est manchonné sur le premier arbre d'équilibrage de pression (9129), la première roue entraînée par pression (91211) est engrenée avec la première roue menante par pression (9127) pour transmettre la force d'entraînement au premier arbre d'équilibrage de pression (9129), la deuxième roue menée par pression (91212) est manchonnée sur le deuxième arbre d'équilibrage de pression (91210), la deuxième roue menée par pression (91212) est engrenée avec la deuxième roue menante par pression (9128) pour transmettre la force d'entraînement au deuxième arbre d'équilibrage de pression (91210), une extrémité du premier arbre d'équilibrage de pression (9129) et du deuxième arbre d'équilibrage de pression (91210) est connectée au mécanisme d'équilibrage de pression, pour entraîner le mécanisme d'équilibrage de pression à s'ouvrir et à se fermer sous l'action de la force d'entraînement.

11. Porte de personnel de centrale nucléaire selon la revendication 10, **caractérisée en ce que**, le module d'entraînement et d'équilibrage de pression (912) comprend en outre : un premier embrayage de sécurité (91213) manchonné sur le cinquième arbre d'entrée (9121) et un deuxième embrayage de sécurité (91214) manchonné sur le sixième arbre d'entrée (9122), le premier embrayage de sécurité (91213) est agencé entre la première roue menante d'interverrouillage (9125) et la première roue menée (9123), le deuxième embrayage de sécurité (91214) est prévu entre la deuxième roue menante d'interverrouillage (9126) et la deuxième roue menée (9124), pour réaliser une protection contre les surcharges.

12. Porte de personnel de centrale nucléaire selon la revendication 11, **caractérisée en ce que**, le module de mécanisme d'interverrouillage (913) comprend : un premier arbre de sortie d'interverrouillage (9131), un deuxième arbre de sortie d'interverrouillage (9132), et une première roue menée d'interverrouillage (9133) et une deuxième roue menée d'interverrouillage (9134) manchonnées de manière correspondante sur une extrémité du premier arbre de sortie d'interverrouillage (9131) et du deuxième arbre de sortie d'interverrouillage (9132), la première roue menée d'interverrouillage (9133) et la deuxième roue menée d'interverrouillage (9134) sont engrenées avec la deuxième roue menante d'interverrouillage (9126) et la première roue menante d'interverrouillage (9125) respectivement, pour transmettre la force d'entraînement au premier arbre de sortie d'interverrouillage (9131) et au deuxième arbre de sortie d'interverrouillage (9132).

13. Porte de personnel de centrale nucléaire selon la revendication 12, **caractérisée en ce que**, le module de mécanisme d'interverrouillage (913) comprend en outre : une unité d'interverrouillage (9135), l'unité d'interverrouillage (9135) est connectée au premier arbre de sortie d'interverrouillage (9131) et au deuxième arbre de sortie d'interverrouillage (9132), l'unité d'interverrouillage (9135) comprend une première cannelure (91351) agencée sur le premier arbre de sortie d'interverrouillage (9131), une deuxième cannelure (91352) agencée sur le deuxième arbre de sortie d'interverrouillage (9132), l'unité d'interverrouillage (9135) comprend en outre une clé (91353), la clé (91353) est connectée à la première cannelure (91351) et à la deuxième cannelure (91352) respectivement, de manière à entraîner la déconnexion ou la combinaison de la première cannelure (91351) et de la deuxième cannelure (91352), pour réaliser l'ouverture unilatérale ou bilatérale de la porte d'étanchéité interne (7) et de la porte d'étanchéité externe (6).

14. Porte de personnel de centrale nucléaire selon la revendication 1, **caractérisée en ce que**, la porte d'étanchéité interne (7) comprend un corps de porte d'étanchéité (71) et un cadre de porte (72), le corps de porte d'étanchéité (71) est connecté à la cartouche de transmission intermédiaire (9), le cadre de porte (72) est connecté de manière fixe à l'ensemble anneau de coque (5), et le corps de porte d'étanchéité (71) est verrouillé au cadre de porte (72) via un dispositif de verrouillage du joint d'étanchéité (73), le dispositif de verrouillage du joint d'étanchéité (73) comprend :
un premier commutateur (731), connecté à la cartouche de transmission intermédiaire (9), pour changer la direction de la force d'entraînement produite par la cartouche de transmission intermédiaire (9) ;
un ensemble de transmission (732), connecté au premier commutateur (731) pour transmettre la force d'entraînement transmise par le premier commutateur (731) ;
un ensemble de verrouillage (733), connecté à l'ensemble de transmission (732), pour verrouiller le corps de porte d'étanchéité (71) au cadre de porte (72) sous l'action de la force d'entraînement.

15. Porte de personnel de centrale nucléaire selon la revendication 14, **caractérisée en ce que**, l'ensemble de transmission (732) comprend : un premier arbre de sortie (7321) connecté au premier commutateur (731) et un premier pignon (7322) manchonné sur le premier arbre de sortie (7321), le premier pignon (7322) et le deuxième pignon (7323) manchonnés sur le mécanisme d'articulation (7324) sont connectés via une première chaîne (7325), le deuxième pignon (7323) entraîne le mécanisme d'articulation (7324) en rotation, et un troisième pignon (7326) manchonné sur le mécanisme d'articulation (7324) tourne par la rotation du mécanisme de charnière (7324), le troisième pignon (7326) est connecté au quatrième pignon (7327) par l'intermédiaire d'une deuxième chaîne (7328), le quatrième pignon (7327) est connecté au deuxième commutateur (7330) par l'intermédiaire d'un troisième arbre de sortie (7329), le deuxième commutateur (7330) est manchonné sur une extrémité de la liaison d'entraînement horizontale (7331), le troisième commutateur (7332) est manchonné sur l'autre extrémité de la liaison d'entraînement horizontale (7331), les extrémités de sortie du troisième commutateur (7332) sont respectivement connectées à la première liaison d'entraînement verticale (7333) et à la deuxième liaison d'entraînement verticale (7334), la première liaison d'entraînement verticale (7333) est connectée à un quatrième commutateur (7335), la deuxième liaison d'entraînement verticale (7334) est connectée à un cinquième commutateur (7336), le quatrième commutateur (7335) et le cinquième commutateur (7336) sont tous deux raccordés à l'ensemble de verrouillage (733).

16. Porte de personnel de centrale nucléaire selon la revendication 15, **caractérisée en ce que**, l'ensemble de verrouillage (733) comprend : une première tige télescopique (741), une deuxième tige télescopique (742), un premier levier de verrouillage (749), un deuxième levier de verrouillage (7410), un premier boulon (743) et un deuxième boulon (744) fixés sur le corps de porte d'étanchéité (71), un troisième boulon (745) et un quatrième boulon de porte (746) fixés sur le cadre de porte (72), un premier joint à rotule (747) reliant la première tige télescopique (741) et le premier levier de verrouillage (749), une deuxième joint à rotule (748) reliant la deuxième tige télescopique (742) et le deuxième levier de verrouillage (7410), une extrémité de la première tige télescopique (741) est connectée à l'une des extrémités de sortie du quatrième commutateur (7335), et l'autre extrémité de la première tige télescopique (741) est connectée au premier joint à rotule (747), l'autre extrémité du premier joint à rotule (747) est connectée à une extrémité du premier levier de verrouillage (749), l'autre extrémité du premier verrouillage (749) s'étend de manière coulissante à travers le premier boulon (743) et le troisième boulon (745), une extrémité de la deuxième tige télescopique (742) est connectée à l'autre extrémité de sortie du quatrième commutateur (7335), l'autre extrémité de la deuxième tige télescopique (742) est connectée au deuxième joint à rotule (748), l'autre extrémité du deuxième joint à rotule (748) est connectée à une extrémité du deuxième levier de verrouillage (7410), l'autre extrémité du deuxième levier de verrouillage (7410) s'étend de manière coulissante à travers le deuxième boulon (744) et le quatrième boulon (746), la première tige télescopique (741) et la deuxième tige télescopique (742) peuvent être entraînées par la force d'entraînement pour s'allonger ou se raccourcir, de sorte que le premier levier de verrouillage (749) s'étende dans ou hors du troisième boulon (745) ; et que le deuxième levier de verrouillage (7410) s'étende dans ou hors du quatrième boulon (746).

17. Porte de personnel de centrale nucléaire selon la revendication 16, **caractérisée en ce que** l'ensemble de verrouillage (733) comprend en outre : une troisième tige télescopique (751), une quatrième tige télescopique (752), un troisième levier de verrouillage (759), un quatrième levier de verrouillage (7510), un cinquième boulon (753) et un sixième boulon (754) fixés sur le corps de porte d'étanchéité (71), un septième boulon (755) et un huitième boulon (756) fixés sur le cadre de porte (20), un troisième joint à rotule (757) reliant la troisième tige télescopique (751) et le troisième levier de verrouillage (759), un quatrième joint à rotule (758) reliant la quatrième tige télescopique (752) et le quatrième levier de verrouillage (7510), une extrémité de la troisième tige télescopique (751) est connectée à l'une des extrémités de sortie du cinquième commutateur (7336), l'autre extrémité de la troisième tige télescopique (751) est connectée au troisième joint à rotule (757), l'autre extrémité du troisième joint à rotule (757) est connectée à une extrémité du troisième levier de verrouillage (759), l'autre extrémité du troisième levier de verrouillage (759) s'étend de manière coulissante à travers le cinquième boulon (753) et le septième boulon (755), une extrémité de la quatrième tige télescopique (752) est connectée à l'autre extrémité de sortie du cinquième commutateur (7336), l'autre extrémité de la quatrième tige télescopique (752) est connectée au quatrième joint à rotule (758), l'autre extrémité du quatrième joint à rotule (758) est connectée à une extrémité du quatrième levier de verrouillage (7510), l'autre extrémité du quatrième levier de verrouillage (7510) s'étend de manière coulissante à travers le sixième boulon (754) et le huitième boulon (756), et la troisième tige télescopique (751) et la quatrième tige télescopique (752) sont entraînées par la force d'entraînement pour s'allonger ou se raccourcir, de sorte que le troisième levier de verrouillage (329) puisse s'étendre dans ou hors du septième boulon (325), et que le quatrième levier de verrouillage (7510) puisse s'étendre dans ou hors du huitième boulon (756).

18. Porte de personnel de centrale nucléaire selon la revendication 1, **caractérisée en ce qu'**un plancher de passage (12) est prévu dans l'espace étanche (8) pour le passage du personnel, et le plancher de passage (12) a une longueur non inférieure à celle des espaces étanches (8).

19. Procédé d'installation d'une porte de personnel de centrale nucléaire selon l'une quelconque des revendications 1 à 18, **caractérisée en ce que**, le procédé d'installation comprend les étapes de :
fixation d'un étrier de support à une position d'installation d'introduction horizontale globale prédéterminée de la porte de personnel de centrale nucléaire via des boulons d'expansion, l'étrier de support étant supporté sur l'enceinte externe (1) via des cales en bois ;
l'installation d'un premier étrier coulissant, d'un deuxième étrier coulissant et d'un chariot de transfert sur l'étrier de support après que l'étier de support a été raccordé et fixé, l'ajustement de l'élévation du chariot de transfert en ajustant un jeu de joints d'ajustement, et la fixation du chariot de transfert via des boulons de raccordement après que l'élévation du chariot de transfert a été ajustée ;
le hissage de la porte de personnel de centrale nucléaire verticalement en un seul bloc par une grue hors site, et la fixation de la porte de personnel de centrale nucléaire au premier support coulissant et au deuxième support coulissant par des câbles métalliques ;
l'installation de chaînes de traction, la traction de la porte de personnel de centrale nucléaire horizontalement jusqu'à une position d'installation prédéterminée, et le retrait du chariot de transfert et de l'étrier de support ; et
l'installation des supports de la porte de personnel de centrale nucléaire, et le retrait du premier étrier coulissant et du premier étrier coulissant.
